# EUROPÄISCHE PATENTSCHRIFT

(11) **EP 3 176 800 B1**
(45) Veröffentlichungstag und Bekanntmachung des Hinweises auf die Patenterteilung: **12.12.2018**
(21) Anmeldenummer: 16195661.0
(22) Anmeldetag: 26.10.2016
(51) Int. Cl.: H01H 3/14, G01L 1/20, F16P 3/12, H01C 10/10, H01R 13/04, H01R 13/10, H02G 9/02

(54) **TRITTMATTE ZUM ABSICHERN EINER TECHNISCHEN ANLAGE**
KICK MAT FOR SECURING A TECHNICAL INSTALLATION
TAPIS DE CONTACT DESTINÉ À PROTÉGER UNE INSTALLATION TECHNIQUE

(30) Priorität: 25.11.2015 DE 102015120371
(43) Veröffentlichungstag der Anmeldung: 07.06.2017
(73) Patentinhaber: Pilz GmbH & Co. KG, 73760 Ostfildern (DE)
(72) Erfinder: Hampe, Tobias, 73760 Ostfildern (DE); Rink, Joachim, 73760 Ostfildern (DE); Kuczera, Matthias, 73760 Ostfildern (DE)
(74) Vertreter: Witte, Weller & Partner Patentanwälte mbB

(56) Entgegenhaltungen:
- WO-A2-2006/083997
- DE-B4- 10 046 974
- DE-C1- 19 604 128
- FR-A1- 2 941 784
- GB-A- 2 248 723
- US-A- 5 602 428

## Beschreibung

Die vorliegende Erfindung betrifft eine Trittmatte zum Absichern einer technischen Anlage.

Mit steigender Automatisierung von Produktionsprozessen haben sich die Anforderungen an die zuverlässige Absicherung industrieller Produktionsanlagen stetig erhöht. Beispielsweise schreibt die Maschinenrichtlinie in der Neufassung vom 17. Mai 2006 für den europäischen Wirtschaftsraum ein einheitliches Schutzniveau zur Unfallverhütung vor, welches beim Inverkehrbringen zu berücksichtigen ist. Demnach dürfen technische Anlagen, Maschinen und Roboter nur in Verbindung mit entsprechenden Sicherheitsmaßnahmen in Betrieb genommen werden. Insbesondere zählen zu diesen Maßnahmen das Überwachen von Gefahrenbereichen einer technischen Anlage und das Überführen der technischen Anlage in einen für Personen und Gegenstände sicheren Zustand, wenn ein (un-)berechtigter Zutritt in den Gefahrenbereich stattgefunden hat.

Zur Anwesenheitserkennung von Personen sind aus dem Stand der Technik sogenannte Tritt- oder Schaltmatten bekannt, wie beispielweise in der DE 100 46 974 B4 gezeigt. Trittmatten dieser Art bestehen regelmäßig aus zwei voneinander getrennten stromführenden Platten, die durch streifen- oder gitterförmige Trennstücke auf Abstand gehalten werden. Betritt eine Person die Trittmatte, verformen sich die Platten und Trennstücke bis es zu einem Querschluss zwischen den Platten kommt. Der Querschluss ist messtechnisch erfassbar und führt dazu, dass ein angeschlossener Sicherheitsrelaisbaustein die technische Anlage abschaltet oder ein Anlaufen dieser verhindert. Die allgemeinen Grundsätze und Anforderungen an die Gestaltung und Prüfung solche druckempfindlichen Schutzeinrichtungen sind in der EN ISO 13856-1 festgelegt. Insbesondere sind in der Norm die Mindestsicherheitsanforderungen in Bezug auf Leistungsfähigkeit, Kennzeichnung und Dokumentation angegeben.

Die oben genannten Trittmatten haben den Nachteil, dass nur ein bestimmter Flächenabschnitt vor einer Maschine überwacht werden kann und Trittmatten daher nur in festgelegten Zugangsbereichen oder definierten Bedienerpositionen eingesetzt werden können, während der weitere Zugang zu der Maschine durch andere Schutzeinrichtungen oder bauliche Maßnahmen gesichert werden muss. Insbesondere bei modernen Anlagen, wie bspw. automatisiert arbeitende Roboter, die frei im Raum stehen und von allen Seiten her zugänglich sein müssen, ist eine Eingrenzung des Zugangs auf bestimmte Zugangsbereiche nicht möglich. Es ist daher wünschenswert, den gesamten Bereich um eine technische Anlage herum mittels einer am Boden angeordneten druckempfindlichen Schutzeinrichtung absichern zu können.

Die eingangs genannten Trittmatten können dies jedoch weder als einzelne Trittmatte noch als Verbund aus mehreren Trittmatten leisten. Die wirksame Fläche einer einzelnen Trittmatte ist durch die jeweilige Plattengröße bestimmt und somit begrenzt. Ebenso ist konstruktionsbedingt die Sensitivität nicht homogen über die Fläche der Trittmatte, wie in der DE 100 46 974 B4 angedeutet, sodass insbesondere in den Randbereichen eine Erkennung nur eingeschränkt oder überhaupt nicht möglich ist. In einem Verbund hat dies zur Folge, dass sich an den Übergängen zwischen den Trittmatten große Bereiche durch das Aufeinandertreffen von Randbereichen ausbilden, in denen eine zuverlässige Erkennung nicht gewährleistet werden kann. FR2941784 offenbart eine Trittmatte zum Absichern einer elektrisch angetriebenen Anlage nach dem Oberbegriff des Anspruchs 1.

Es ist somit eine Aufgabe der vorliegenden Erfindung, eine Trittmatte anzugeben, die die vorstehend genannten Nachteile vermeidet, d.h. eine Trittmatte, die insbesondere modular erweiterbar ist und eine zuverlässige Erkennung auch in den Übergangsbereichen zwischen zwei benachbarten Trittmatten ermöglicht.

Gelöst wird diese Aufgabe durch eine Trittmatte zum Absichern einer elektrisch angetriebenen Anlage mit einem Sensor, einem starren Trägerkörper und einer Auswerteeinheit, wobei der Trägerkörper eine Oberseite, eine Unterseite sowie eine erste und eine zweite Seitenfläche, die an die Oberseite und die Unterseite anschließen, aufweist, wobei die Auswerteeinheit im Inneren des Trägerkörpers angeordnet ist und dazu ausgebildet ist, ein Ausgangssignal in Abhängigkeit der Betätigung des Sensors bereitzustellen, wobei der Sensor eine aktive Oberfläche aufweist, welche die Oberseite des Trägerkörpers bedeckt, wobei die Unterseite eine Öffnung zur Kontaktierung der Auswerteeinheit im Inneren des Trägerkörpers aufweist, wobei die erste Seitenfläche eine erste Aussparung aufweist und die zweite Seitenfläche eine zweite Aussparung aufweist, und wobei die Unterseite eine erste und zweite Kabelführung aufweist und die erste Kabelführung die Öffnung mit der ersten Aussparung verbindet und die zweite Kabelführung die Öffnung mit der zweiten Aussparung verbindet.

Es ist somit eine Idee der vorliegenden Erfindung, die Sensorik und den Gehäuseaufbau einer Trittmatte voneinander zu trennen. Dies hat den Vorteil, dass die wirksame Fläche der Trittmatte von der Anordnung des Sensors auf dem Gehäuse und nicht von dem Gehäuse selbst abhängig ist. Damit ist auch der Sensor nicht vom Aufbau des Gehäuses abhängig und kann beliebig ausgestaltet sein. Vorteilhaft wird ein flexibler, taktiler Sensor verwendet, der auf dem Trägerkörper angeordnet ist, sodass die aktive Sensorfläche eine Oberfläche des Trägerkörpers im Wesentlichen vollständig bedeckt. Die aktive Sensorfläche ist die Fläche des Sensors, die berührungsempfindlich ausgebildet ist, um eine mechanische Belastung zu detektieren. Die aktive Sensorfläche wird auch als wirksame Betätigungsfläche des Sensors bezeichnet.

Die Trennung von Sensor und Gehäuse hat ferner den Vorteil, dass der Trägerkörper starr und robust ausgestaltet sein kann, da der Trägerkörper selbst nicht zur Funktion des Sensors beiträgt, sondern lediglich eine Auflage für diesen bietet. Durch eine starre Ausgestaltung des Trägerkörpers kann vorteilhaft eine homogene Sensitivität über die gesamte wirksame Fläche gewährleistet werden, wodurch die Zuverlässigkeit der Erkennung erhöht wird. Zudem kann die Trittmatte aufgrund des starren Trägerkörper vorteilhaft in Bereichen mit weichem oder unebenen Untergrund eingesetzt werden, da diese Unebenheiten in Bezug auf den Sensor durch den starren Trägerkörper ausgeglichen werden, ohne die Sensitivität der Trittmatte zu beeinflussen. Starr bedeutet in diesem Zusammenhang, dass der Trägerkörper eine homogene Festigkeit aufweist und einer Druckbelastung senkrecht zur Oberseite von mindestens 800 N/cm² standhalt kann. Der starre Trägerkörper kann ein- oder mehrteilig sein, sodass ein Trägerkörper auch starr im Sinne der Erfindung ausgebildet ist, wenn dieser aus einem Verbund aus einer Stahlplatte und einer elastischen Komponente, bspw. eine Polyurethanunterlage, gefertigt ist. Die zusätzliche elastische Komponente des Trägerkörpers ermöglicht es, dass sich der Trägerkörper vorteilhaft kleineren Bodenunebenheiten anpassen kann.

Die Auswerteeinheit ist eine mit dem Sensor verbundene Signalverarbeitungseinheit, die dazu ausgebildet ist, eine mechanische Belastung des Sensors auszuwerten und in Abhängigkeit der Auswertung ein Ausgangsignal bereitzustellen. Durch die Anordnung der Auswerteeinheit im Inneren des starren Trägerkörpers ist diese besonders gut gegen die mechanischen Belastungen beim Auftreten auf die Trittmatte geschützt. Zudem kann eine regelmäßig aufwendige Kontaktierung eines Sensors mit einer Vielzahl von einzelnen Sensorzellen vorteilhaft im Inneren der Trittmatte erfolgen.

Das Bereitstellen des Ausgangssignals erfolgt vorteilhaft über eine Öffnung in der Unterseite der Trittmatte und über von der Öffnung ausgehenden Kabelführungen, welche die Öffnung mit Aussparungen in den Seitenflächen des Trägerkörpers verbinden. Ein Ausgangssignal kann somit bei kompakter Bauweise der Trittmatte auf einfache Weise nach außen geführt werden. Insbesondere können einzelne Trittmatten vorteilhaft zu einem Verbund mit einer durchgängigen wirksamen Betätigungsfläche zusammengeschaltet werden, wobei ein elektrischer Zusammenschluss der Trittmatten vollständig unterhalb der wirksamen Betätigungsfläche erfolgen kann. Vorteilhaft können über die erste und zweite Kabelführung wahlweise unterschiedliche Seitenflächen kontaktiert werden, sodass beim Zusammenschalten der Trittmatten diese nicht hinsichtlich einer bestimmten Orientierung festgelegt sind.

Die Ausbildung der Trittmatte als Modul ermöglicht es, die Trittmatten wie Fliesen zu einem Verbund zusammenzusetzen, wobei vorteilhaft eine Ebene lückenlos gefüllt (parkettiert) werden kann. Durch den variierbaren Anschluss der Auswerteeinheit mittels verschiedener Kabelführungen lässt sich ein Verbund aus Trittmatten leicht ändern bzw. erweitern, um den Verbund an einen Überwachungsbereich einer technischen Anlage anzupassen. Die oben gennannte Aufgabe ist damit vollständig gelöst.

In einer bevorzugten Ausgestaltung definiert die Unterseite eine plane Ebene und die erste und zweite Kabelführung sind in der Unterseite versenkt. Diese Weiterbildung hat den Vorteil, dass die Trittmatte flach und bündig auf einem ebenen Untergrund verlegt werden kann. Die Unterseite ist im Wesentlichen eine glatte Fläche, in die die Kabelführungen so versenkt sind, dass Anschlusskomponenten, die in den Kabelführungen verlegt werden können, nicht über die plane Ebene hinausragen. Eine mechanische Kraft, die von der Oberseite auf die Trittmatte einwirkt, wird somit an Komponenten, die in den Kabelführungen eingelegt sind herum geführt. Komponenten in den Kabelführungen, bspw. ein Kabelstrang oder Kabelbaum, sind somit nach dem Verlegen der Trittmatte einerseits vor einem Zugriff und andererseits vor mechanischer Belastung geschützt.

In einer weiteren Ausgestaltung sind die erste und zweite Kabelführung kanalartige, längliche Vertiefungen in der Unterseite des Trägerkörpers mit einer definierten Länge und einer definierten Breite. Diese Weiterbildung hat den Vorteil, dass sich eine Anschlusskomponente für die Auswerteeinheit, wie bspw. ein Kabel oder ein Kabelbaum besonders leicht mit einem definierten Verlauf verlegen lässt. Der definierte Verlauf ermöglicht ein geordnetes und damit auch sicheres Verlegen von Anschlusskomponenten. Vorteilhaft sind die definierte Länge und Breite so gewählt, dass sie der Länge und Breite einer Anschlusskomponente entsprechen. Darüber hinaus lassen sich die kanalartigen Vertiefungen auf einfache Weise bereits beim Herstellen des Trägerkörpers, beispielsweise direkt beim Spritzgießen des Trägerkörpers, erstellen. Es werden keine zusätzlichen Halterungen für die Anschlusskomponenten benötigt.

In einer besonders bevorzugten Ausgestaltung ist die definierte Länge der ersten Kabelführung gleich der definierten Länge der zweiten Kabelführung. Diese Weiterbildung hat den Vorteil, dass unabhängig von den Seitenflächen, zu denen die Kabelführungen führen, eine gleichlange Anschlusskomponente verwendet werden kann. Dies ist besonders vorteilhaft, wenn die Öffnung konstruktionsbedingt nicht mittig in der Unterseite angeordnet ist, sondern näher an einer der beiden Seitenflächen, zu denen die Kabelführungen führen. Eine Anschlusskomponente mit einer definierten Länge kann somit sowohl in der ersten als auch der zweiten Kabelführung auf gleiche Weise ordentlich und sicher verlegt werden.

In einer besonders bevorzugten Ausgestaltung weist die erste Kabelführung einen ersten Abschnitt und einen zweiten Abschnitt auf, wobei im ersten Abschnitt die definierte Breite konstant ist und im zweiten Abschnitt die definierte Breite über die Länge des Abschnitts variiert. Diese Weiterbildung hat den Vorteil, dass im zweiten Abschnitt ein definierter Stauchraum in den Kabelführungen geschaffen wird. Ein Stauchraum ermöglicht es, an dieser Stelle eine Anschlusskomponente mit Spiel zu verlegen, während in den übrigen Abschnitten die Anschlusskomponente spielfrei geführt ist. Somit können insbesondere kleinere Abweichungen in der Länge der Anschlusskomponente, wie sie beim Zusammenschluss von Anschlusskomponenten benachbarter Trittmatte entstehen können, kontrolliert ausgeglichen werden. Vorzugsweise ist der zweite Anschnitt zweigeteilt in einen ersten Bereich mit gleichmäßig zunehmender Breite und in einen zweiten Bereich mit gleichmäßig abnehmender Breite. Der Stauchraum ergibt sich somit aus einer gleichmäßigen, vorzugsweise stetigen Verbreiterung der im Übrigen konstanten Breite einer Kabelführung. Besonders bevorzugt schließt an beiden Seiten des zweiten Abschnitts jeweils ein erster Abschnitt an, in dem eine Anschlusskomponente spielfrei einlegbar ist, sodass die Anschlusskomponente an zwei Seiten sicher im Stauchraum fixiert ist.

In einer besonders bevorzugten Ausgestaltung weisen die kanalartigen, länglichen Vertiefungen in einem Querschnitt in der Breite ein tonnenförmiges Profil auf. Diese Weiterbildung hat den Vorteil, dass die Vertiefungen besonders gut dafür geeignet sind, eine Anschlusskomponente sicher in der Kabelführung zu halten. Durch das tonnenförmige Profil haben die Vertiefungen gewölbte Seitenwände, an denen eine Anschlusskomponente, insbesondere ein rundes Kabel, bündig angelegt werden kann. Das tonnenförmige Profil verhindert somit, dass eine Anschlusskomponente aus der Kabelführung herausrutscht.

In einer weiteren Ausgestaltung sind die erste und zweite Kabelführung so ausgebildet, dass die erste Kabelführung die Öffnung und die erste Aussparung knickfrei verbindet und die zweite Kabelführung die Öffnung und die zweite Aussparung knickfrei verbindet. Diese Weiterbildung hat den Vorteil, dass in den Kabelführungen eine Anschlusskomponente nicht um eine Kante verlegt werden muss. Der knickfreie Verlauf der Kabelführung ermöglicht somit das Verlegen von Anschlusskomponenten mit geringer Flexibilität, die eine definiert Vorzugsrichtung, in der sie sich erstrecken, aufweisen, wie bspw. ummantelte geschirmte Kabel oder Kabelstränge.

In einer weiteren Ausgestaltung weisen die erste und zweite Kabelführung einen kurvenartigen Verlauf mit variierender Krümmung auf. Diese Weiterbildung hat den Vorteil, dass die Kabelführungen knickfrei ausgebildet sind, um eine einfache Kabelführung zu ermöglichen. Ferner kann durch den kurvenartigen Verlauf eine definierte Länge der Kabelführung erreicht werden unabhängig von der Lage der Öffnung bzw. der Aussparungen. So kann eine gleiche definierte Länge für verschiedene Kabelführungen ermöglicht werden, selbst wenn die Strecken zwischen den Aussparungen in den Seitenflächen und der Öffnung ungleich sind.

In einer weiteren Ausgestaltung weist die erste Kabelführung einen kurvenartigen Verlauf mit mindestens einem geraden Abschnitt und mit mindestens einem Übergangsbogen auf. Diese Weiterbildung hat den Vorteil, dass der kurvenartige Verlauf in einem Bogen nur langsam und nicht sprungartig enger wird, sodass auch eine Anschlusskomponente mit geringer Flexibilität glatt in der Kabelführung anliegen kann. Ein Übergangsbogen ist hier ein Verbindungselement, das zwischen einer Geraden und einem Kreisbogen, zwischen zwei Kreisbögen oder zwischen zwei Geraden, die in einem Winkel zueinander stehen, angeordnet ist. Ein Übergangsbogen weist im Gegensatz zu einer Geraden oder einem Kreisbogen variierende Krümmungsradien auf und ermöglicht einen ruckfreien Übergang zwischen zwei Abschnitten. Zwei benachbarte Abschnitte des kurvenartigen Verlaufs sind immer tangentenstetig zueinander.

In einer weiteren Ausgestaltung weisen die erste Kabelführung und die zweite Kabelführung im Bereich der Öffnung mindestens einen gemeinsamen Abschnitt auf. Diese Weiterbildung hat den Vorteil, dass die Kabelführungen im Bereich der Öffnung zusammenliegen, sodass eine Anschlusskomponente mit einer definierten Vorzugsrichtung aus der Öffnung austreten kann und in beide Kabelführungen mündet. Eine Anschlusskomponente, die fest mit der Öffnung verbunden ist und in einer Vorzugsrichtung aus dieser herausragt, ist somit wahlweise in eine der beiden Kabelführungen einlegbar. Vorteilhaft wird auf diese Weise eine in der Öffnung fixierte Anschlusskomponente mechanisch nur geringfügig belastet, wenn die Anschlusskomponente von der einen in die andere Kabelführung gelegt wird. Somit kann die Öffnung ohne besondere Vorkehrungen verschlossen und abgedichtet werden, um eine hohe Schutzart, bspw. IP67 für die Trittmatte zu gewährleisten. Gleichzeitig lässt sich ein Verbund von Trittmatten flexibel zusammenschalten.

In einer weiteren Ausgestaltung ist die Auswerteeinheit über ein Kabel kontaktiert, welches in der Öffnung fixiert ist und welches mit einer definierten Kabellänge aus dem Trägerkörper austritt. In dieser Ausgestaltung ist die Auswerteeinheit mit einem Kabel als Anschlusskomponente verbunden. Das Kabel ist vorzugsweise ein mehradriges, geschirmtes und ummanteltes Kabel zur Übertragung des Ausgangssignals oder zur Aufnahme von Steuer- oder anderweitiger Eingangssignale oder einer Versorgungsspannung. Das Kabel tritt mit einer definierten Länge aus dem Trägerkörper aus, d.h. es ist in der Öffnung fixiert, sodass es weder weiter hineingesteckt noch aus der Öffnung herausgezogen werden kann. Die Anschlusskomponente für die Auswerteeinheit ist somit fest mit der Trittmatte verbunden, sodass der Trägerkörper vollständig verschlossen und abgedichtet sein kann, um eine hohe Schutzart zu gewährleisten.

In einer besonders bevorzugten Ausgestaltung weist das Kabel einen Steckverbinder auf und die Unterseite eine erste Senke und eine zweite Senke als Aufnahme für den Steckverbinder. Diese Weiterbildung hat den Vorteil, dass die Auswerteinheit einfach über einen Steckverbinder kontaktiert werden kann, der selbst in die Unterseite integrierbar ist. Die erste und zweite Senke sind an die äußere Form des Steckverbinders angepasst, sodass sich der Steckverbinder in die erste und zweite Senke formschlüssig einlegen lässt. Vorzugsweise sind Senke und Steckverbinder so ausgebildet, dass sich der Steckverbinder in die Senke einclipsen und fixieren lässt, sodass der Steckverbinder nach Einlegen in die erste oder zweite Senke in der Unterseite versenkt ist. Der Steckverbinder kann darüber hinaus in Achsrichtung diskret oder frei beweglich sein.

In einer besonders bevorzugten Ausgestaltung ist die erste Senke am Ende der ersten Kabelführung angeordnet und mündet in der ersten Aussparung und die zweite Senke ist am Ende der zweiten Kabelführung angeordnet und mündet in der zweiten Aussparung. Die Senken für den Steckverbinder bilden den Abschluss der Kabelführungen. Am Übergang von den Kabelführungen zur Senke ist vorzugweise eine Kante angeordnet, an der der Steckverbinder anliegt und aus der Kabelführung zurückgehalten wird. Vorteilhaft liegt somit eine Anschlusskomponente von Zugspannungen unbelastet in der Kabelführung.

In einer besonders bevorzugten Ausgestaltung überschneiden sich die erste Senke und die zweite Senke in einem Winkel, vorzugsweise rechtwinklig. Diese Weiterbildung hat den Vorteil, dass die Senken eng beieinander liegen und somit in einem ähnlichen Abstand zur Öffnung angeordnet sein können. Der Schnittwinkel der Senken entspricht dem Winkel, in dem sich die zugehörigen Seitenflächen schneiden. Die Aussparungen in den Seitenflächen sind auf diese Weise vorteilhaft in den Ecken der Trittmatte angeordnet. Vorzugsweise sind die Aussparungen im gleichen Abstand von der Schnittkante der Seitenflächen angeordnet, wodurch ein Zusammensetzen einzelner Trittmatten zu einem Verbund weiter vereinfacht wird.

In einer besonders bevorzugten Ausgestaltung weist der Steckverbinder eine Anschlussseite auf und die erste und zweite Senke sind so ausgebildet, dass der Steckverbinder in einer ersten Position und in einer zweiten Position in die erste Senke einlegbar ist, wobei in der ersten Position die Anschlussseite des Steckverbinder bündig mit der Seitenfläche abschließt und in der zweiten Position die Anschlussseite des Steckverbinder unbündig zur Seitenfläche angeordnet ist. Diese Weiterbildung hat den Vorteil, dass die Steckverbinder in verschiedenen Positionen in den Senken gehalten werden können, wodurch ein Zusammenschließen benachbarter Trittmatten in einem Verbund vereinfacht wird. Ein Steckverbinder kann somit über die Seitenflächen hinausragen, um den Stecker einer benachbarten Trittmatte zu kontaktieren. Trittmatten lassen sich so vorteilhaft einfach und flexibel zusammenschalten.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1:: eine schematische Darstellung möglicher Anwendungsgebiete von Ausführungsbeispielen der neuen Schutzeinrichtung,
- Fig. 2:: eine perspektivische Darstellung eines Ausführungsbeispiels einer neuen Trittmatte,
- Fig. 3:: ein Ausführungsbeispiel eines Sensors einer neuen Trittmatte,
- Fig. 4:: eine schematische Darstellung eines weiteren Ausführungsbeispiels eines Sensors,
- Fig. 5:: eine explosionsartige Darstellung eines Ausführungsbeispiels einer neuen Trittmatte,
- Fig. 6:: eine Schnittzeichnung eines Ausführungsbeispiels einer neuen Trittmatte,
- Fig.7:: eine schematische Darstellung eines Ausführungsbeispiels einer Anschlussschaltung eines Sensors,
- Fig. 8:: eine schematische Darstellung eines bevorzugten Ausführungsbeispiels einer Anschlussschaltung eines Sensors, und
- Fig. 9:: ein bevorzugtes Ausführungsbeispiel einer Unterseite einer neuen Trittmatte in einer perspektivischen Darstellung.

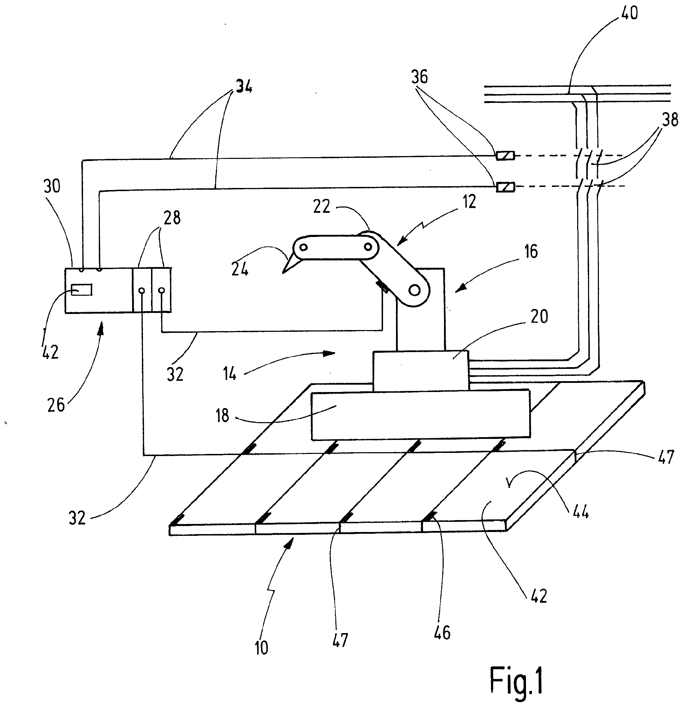

In der Fig. 1 sind ein erste druckempfindliche Schutzeinrichtung und ein zweite druckempfindliche Schutzeinrichtung in ihrer Gesamtheit mit den Bezugsziffern 10 und 12 gekennzeichnet. Die erste und zweite druckempfindliche Schutzeinrichtung dienen der Absicherung einer technischen Anlage 14, die hier als ein automatisiert arbeitender Roboter 16 angedeutet ist. Bei dem Roboter 16 kann es sich beispielsweise um einen Schneid- oder Schweißroboter in einer Fertigungs- oder Montagelinie handeln.

Der Roboter 16 ist auf einer Halterung 18 montiert und über einen Antrieb 20 um die eigene Achse drehbar. Ferner weist der Roboter 16 einen Roboterarm 22 auf, an dessen Ende sich ein Werkzeug 24 befindet. Der Dreh- und Schwenkbereich des Roboterarms 22 definiert einen Wirkungsbereich des Roboters 16, der gleichzeitig einem Gefahrenbereich des Roboters 16 entspricht. Ein Eintreten in diesen Bereich - sowohl unberechtigtes als auch berechtigtes - muss erkannt werden, sodass der Roboter in einen für Personen ungefährlichen Zustand überführt werden kann. Die Erkennung erfolgt hier durch die druckempfindlichen Schutzeinrichtungen 10 und 12, die mit einem Sicherheitssystem 26 gekoppelt sind. Das Sicherheitssystem 26 kann eine Ausgangsschalteinrichtung im Sinne der EN ISO 13856-1 sein, bspw. ein einfaches Sicherheitsschaltgerät, eine konfigurierbare Sicherheitssteuerung oder aber eine programmierbare Steuereinheit. Das Sicherheitssystem 26 ist dazu ausgebildet, die technische Anlage 14 in einem für Personen ungefährlichen Zustand zu überführen, beispielsweise indem die technische Anlage stromlos geschaltet wird.

In der Fig. 1 ist ein modulares Sicherheitssystem 26 dargestellt, welches Eingangsmodule 28 und ein Ausgangsmodul 30 aufweist. Die Eingangsmodule 28 sind über Leitungen 32 mit den druckempfindlichen Schutzeinrichtungen 10, 12 gekoppelt. Im vorliegenden Ausführungsbeispiel ist das Ausgangsmodul 30 über eine redundante Leitung 34 mit Schützen 36 verbunden, deren Arbeitskontakte 38 in einer Stromversorgung 40 des elektrischen Antriebs 20 angeordnet sind. In Abhängigkeit der an den Eingangsmodulen 28 anliegenden Signale der druckempfindlichen Schutzeinrichtungen 10, 12 steuert eine Verarbeitungseinheit 42 die Schütze 36 an, um den Roboter 16 bei Gefahr stromlos zu schalten. Es versteht sich, dass das Stromlosschalten der technischen Anlage 14 nur eine Möglichkeit darstellt, die technische Anlage in einen sicheren Zustand zu überführen. Alternativ oder ergänzend kann in einem anderen Ausführungsbeispiel das Sicherheitssystem 26 auch steuernd in den Bewegungsablauf des Roboters 16 eingreifen, um einen sicheren Zustand herzustellen, beispielsweise indem der Roboter 16 den Roboterarm 22 einzieht. Ebenso ist es denkbar, dass die Verarbeitungseinheit 42 die Signale der ersten druckempfindliche Schutzeinrichtung 10 und der zweiten druckempfindliche Schutzeinrichtung 12 oder weitere Schutzeinrichtungen kombiniert betrachtet und aus der Zusammenschau eine Entscheidung über die Ansteuerung des Roboters 16 trifft. Weitere Schutzeinrichtungen können bspw. berührungslos wirkende Schutzeinrichtungen (BWS) wie Lichtschranken oder Lichtgitter sein oder aber ein sicheres Kamerasystem.

Im Ausführungsbeispiel gemäß Fig. 1 ist die erste druckempfindliche Schutzeinrichtung 10 eine Trittmatte, insbesondere eine Schaltmatte im Sinne der EN ISO 13856-1, die auf dem Boden rund um die Halterung 18 des Roboters 16 verlegt ist. Die Trittmatte ist in diesem Ausführungsbeispiel modular aufgebaut und weist hier acht Trittmattenmodule 42 auf, die in zwei Reihen zu je vier Modulen zusammengesetzt sind. Jedes Trittmattenmodul 42 weist einen Sensor mit einer aktiven Sensorfläche 44 und einer Auswerteeinheit 46 auf. Die aktive Sensorfläche 44 ist druckempfindlich ausgebildet, wie anhand der nachfolgenden Figuren im Einzelnen noch näher erläutert wird. Die Auswerteeinheit 46 ist dazu ausgebildet, eine Belastung der druckempfindlichen aktiven Sensorfläche 44 zu registrieren und in Abhängigkeit davon ein Ausgangssignal bereitzustellen. Die Auswerteeinheit 46 kann eine digitale oder analoge Schaltung, ein Mikrocontroller, ein FPGA, ein ASIC oder eine jede andere Signalverarbeitungseinheit sein.

Das Ausgangssignal der Auswerteeinheit 46 ist in diesem Ausführungsbeispiel ein Signal, welches einen ersten Zustand und einen zweiten Zustand anzeigen kann. Vorzugsweise wird der sichere Zustand durch ein aktives Ausgangssignal (always on) angezeigt. Das Ausgangssignal ist besonders bevorzugt ein OSSD-Signal, d.h. ein redundantes Signal mit zwei Taktsignalen, die zueinander nicht synchron sind. Die Ausgangssignale der einzelnen Auswerteeinheiten 46 können einzeln oder zusammengefasst über die Leitung 32 zum Eingangsmodul 28 des Sicherheitssystems 26 übertragen werden. Bleibt das Ausgangssignal aus oder erreicht das Ausgangsignal das Eingangsmodul 28 nicht in der erwarteten Form, wird die zuvor beschriebene Sicherheitsfunktion von dem Sicherheitssystem 26 ausgeführt und die technische Anlage 14 über die Schütz 36 stromlos geschaltet.

Die aus den einzelnen Trittmattenmodulen 42 zusammengesetzte Trittmatte weist eine im Wesentlichen durchgängige Sensoroberfläche auf, die aus den einzelnen aktiven Sensorflächen 44 der Trittmattenmodule 42 gebildet ist. Im Wesentlichen durchgängig bedeutet in diesem Zusammenhang, dass eine sicherheitsrelevante Erkennung auch in den Übergangsbereich von benachbarten Trittmatten erfolgen kann und die passiven Randbereiche entsprechend minimiert sind. Ein Trittmattenmodul 42 weist im Ausführungsbeispiel gemäß Fig.1 einen quaderförmigen Trägerkörper mit einer ausgedehnten Basis auf. Die Basis weist eine im Verhältnis zu den Seitenflächen großflächigen Ober- und Unterseite auf. Die aktive Sensorfläche 44 der Trittmattenmodule 42 bedeckt die Oberseite der Basis vollständig. Die wirksame Betätigungsfläche des Trittmattenmoduls erstreckt sich somit nahezu über die gesamte Oberfläche des Trittmattenmoduls 42. Im Verbund mehrerer Trittmattenmodule reicht die wirksame Betätigungsfläche bis an die Stoßfugen 47 zweier benachbarter Trittmattenmodule 42, um eine nahezu nahtlose Betätigungsfläche der Trittmatte zu bilden. In einem Ausführungsbeispiel weist der Trägerkörper zusätzlich einen schmalen Rand auf, der die Basis umläuft, um eine weitere Schutzschicht auf diesen Rand zu befestigen, um eine besonders hohe Schutzart (IP67) zu erreichen.

Zur Erkennung einer Betätigung der Trittmatte werden auch die Auswerteeinheiten 46 der einzelnen Trittmattenmodule 42 zu einem Verbund zusammengeschaltet. Dies erfolgt vorzugsweise unterhalb der aktiven Sensorflächen 44 im Inneren der Trittmattenmodule 42 oder an deren Unterseite. In einem Ausführungsbeispiel sind die Auswerteeinheiten 46 in Serie geschaltet, wobei die erste oder letzte Auswerteeinheit 46 der Kette mit dem Eingangsmodul eines Sicherheitssystems verbunden ist. Die Serienschaltung ist so ausgebildet, dass sobald ein Ausgangssignal einer Auswerteeinheit 46 ausbleibt, für die gesamte Trittmatte eine Betätigung an das angeschlossene Sicherheitssystem signalisiert wird. In anderen Ausführungsbeispielen sind aber auch andere Verknüpfungen der Auswerteeinheiten 46, bspw. ein Master- und Slave-Verbund, sowie eine andere Signalverarbeitung denkbar. So können in einem Ausführungsbeispiel auch die durch die einzelnen Auswerteeinheiten 46 erfassten Werte unmittelbar an das Sicherheitssystem weitergeleitet werden, welches selbstständig entscheidet, wie die Betätigung eines Trittmattenmoduls zu werten ist.

Im Ausführungsbeispiel gemäß Fig. 1 ist die technische Anlage 14 auf der Trittmatte und der wirksamen Oberfläche angeordnet. In anderen bevorzugten Ausführungsbeispielen ist die Trittmatte, um die Halterung 18 der technischen Anlage 14 herum angeordnet. Steht die Anlage auf der wirksamen Oberfläche, müssen die Trittmatte bzw. die einzelnen Trittmattenmodule so ausgebildet sein, dass die Bereich auf denen die technische Anlage 14 steht ausgeblendet werden können. Mit anderen Worten muss die Trittmatte ortsauflösend sein, um zu erkennen, welche Bereiche der aktiven Sensorfläche betätigt worden sind. Mittels der Ortsauflösung können dann einzelnen Bereiche, auf denen die technische Anlage 14 steht, bei der Auswertung unberücksichtigt bleiben.

Der zweite Signalgeber 12 weist in dem Ausführungsbeispiel gemäß Fig. 1 ebenfalls eine aktive Sensoroberfläche 44 sowie eine mit einem Eingangsmodul 28 des Sicherheitssystems 26 über die Leitung 32 verbundene Auswerteeinheit 46 auf. Die aktive Sensorfläche 44 des zweiten Signalgebers 12 ist hier auf einer Oberfläche der technischen Anlage 14, insbesondere auf dem Roboterarm 22 angeordnet. Die aktive Sensoroberfläche 44 ist flexibel und an die Kontur der Oberfläche der technischen Anlage 14 angepasst. Wie bei der Trittmatte können auch in diesem Ausführungsbeispiel mehrere aktive Sensorflächen 44 zu einem Verbund zusammengeschaltet werden, um die wirksame Betätigungsfläche zu vergrößern. Vorzugweise ist der im Raum bewegliche Teil des Roboters vollständig von der aktiven Sensoroberfläche 44 bedeckt.

Im Ausführungsbeispiel gemäß Fig. 1 weist der Roboterarm 22 zwei zylinderförmige Komponenten auf, auf deren zylindrischer Oberfläche die aktive Sensoroberfläche 44 angeordnet ist. Der zweite Signalgeber 12 ist im Gegensatz zum ersten Signalgeber 10 dazu ausgebildet, nicht den Zugang zur technischen Anlage 14 zu überwachen, sondern eine Berührung des Roboterarms 22 mit einem Gegenstand oder einer Person zu detektieren. Wie beim ersten Signalgeber 10 erzeugt auch die Auswerteeinheit 46 des zweiten Signalgebers ein Ausgangssignal, in dessen Abhängigkeit das Sicherheitssystem 26 den Roboter 16 steuern, insbesondere stromlos schalten kann. Der technische Aufbau des ersten und des zweiten Signalgebers 10, 12 wird anhand der nachfolgenden Figuren näher erläutert. Gleiche Bezugszeichen bezeichnen gleiche Teile.

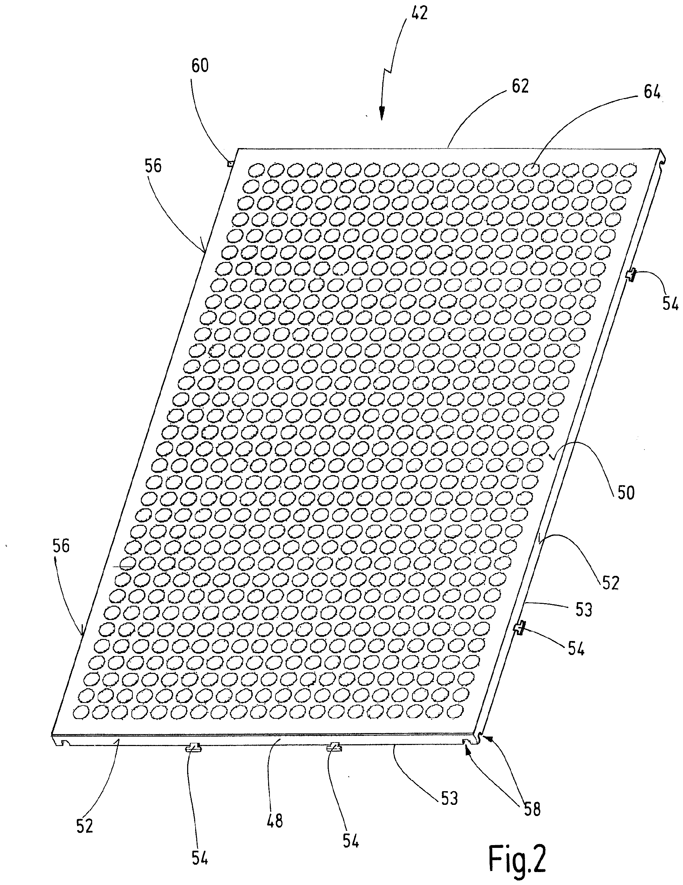

Fig. 2 zeigt eine perspektivische Darstellung eines Ausführungsbeispiels eines Trittmattenmoduls 42 der in Fig. 1 gezeigten ersten druckempfindlichen Schutzeinrichtung 10. Das Trittmattenmodul 42 weist einen starren Trägerkörper 48 mit einer großflächigen, ebenen Oberfläche 50 sowie schmalen zur Oberfläche 50 senkrecht stehenden Seitenflächen 52 auf. Im Ausführungsbeispiel gemäß Fig. 2 ist die ebene Oberfläche 50 rechteckig und das Trittmattenmodul 42 insgesamt quaderförmig ausgebildet, d.h. die Oberfläche 50, die Unterseite sowie die Seitenflächen 52 sind orthogonal zueinander angeordnet. Es versteht sich, dass in anderen Ausführungsbeispielen auch andere Formen denkbar sind. Insbesondere sind eine dreieckige, rautenförmige oder hexagonale Form der Oberfläche denkbar, also insbesondere Formen, mit denen eine Ebene lückenlose ausgefüllt (parkettiert) werden kann.

Im Ausführungsbeispiel gemäß Fig. 2 ist das Trittmattenmodul 42 60 cm breit und 1 m tief und 3 cm hoch. Vorzugsweise ist die Oberfläche 50 zwischen 0,25 m² und 1 m² groß. Dieses Maß ist besonders geeignet die Trittmattenmodule 42 wie normale Fliesen zu verlegen. Im vorliegenden Ausführungsbeispiel sind an zwei Seitenkanten 53 zu der Unterseite des Trittmattenmoduls T-förmige Verbindungselemente 54 angeordnet, die senkrecht von dem Trittmattenmodul 42 abstehen. An den zwei Seitenkanten 53 gegenüberliegenden Seitenkanten sind den Verbindungselementen 54 gegenüberliegende Aufnahmen 56 angeordnet. Die Aufnahmen 56 sind den Verbindungselementen 54 entsprechende, T-förmige Aussparungen an der Unterseite des Trägerkörpers 48, sodass zwei benachbarte Trittmattenmodule 42 bündig aneinander liegen und fixiert werden können, indem die Aufnahmen 56 und die Verbindungselemente 54 ineinandergreifen. Es versteht sich, dass in anderen Ausführungsbeispielen andere Verbindungsvorrichtungen denkbar sind. So können in einem Ausführungsbeispiel die Verbindungselemente separate Bauteile mit einer doppel-T-förmigen Kontur sein, die bei Bedarf in die Aufnahmen 56 eingelegt werden. In einem anderen Ausführungsbeispiel können auch U-Profile, bspw. aus Aluminium, zur Verbindung der Trittmattenmodule verwendet werden.

Im Ausführungsbeispiel gemäß Fig.2 sind ferner weitere Aussparungen in den Seitenflächen 52 angeordnet, wobei in mindestens einer dieser Aussparungen 58 ein Steckverbinder 60 zum elektrischen Kontaktieren eines benachbarten Trittmattenmoduls 42 angeordnet ist. In einer weiteren Aussparung 58 kann ein zum Steckverbinder 60 passender Stecker (hier nicht dargestellt) angeordnet sein. Eine Auswerteeinheit des Trittmattenmoduls 42 ist (ebenfalls hier nicht sichtbar) innerhalb des Trägerkörpers 48 angeordnet. Über die Stecker und Steckverbinder 60 kann die Auswerteeinheit mit einem Sicherheitssystem oder aber mit einer weiteren Auswerteeinheit eines benachbarten Trittmattenmoduls 42 verbunden sein. In einem Ausführungsbeispiel benötigt jede Schaltmatte einen Abschlussstecker. Vorzugsweise kann der Steckverbinder 60 in verschiedenen Aussparungen 58 angeordnet sein, wobei vorzugsweise in allen Eckbereichen des Trittmattenmoduls 42 Aussparungen 58 vorgesehen sind. Auf diese Weise kann die Trittmatte besonders leicht und flexibel zu einem Verbund zusammengesetzt werden.

Die ebene Oberfläche 50 ist in diesem Ausführungsbeispiel vollständig von einer elastischen Gummimatte 62 bedeckt, bspw. eine Matte aus Polyurethan, sodass der darunterliegende Sensor verdeckt ist. Vorzugsweise ist die Gummimatte 62 an der ebenen Oberfläche 50 und den Übergängen zu den Seitenflächen 52 so fixiert, dass Wasser, Staub und andere Verunreinigungen nicht ins Innere des Trägerkörpers 48 eindringen können. Besonders bevorzugt sind die Gummimatte 62 und der Trägerkörper 48 so ausgebildet, dass das Trittmattenmodul 42 der internationalen Schutzart IP67 genügt. Gleiches gilt für die Stecker und Steckverbinder 60. Unterhalb der Gummimatte 62, die hier an ihrer Oberfläche Noppen 64 aufweist, um die Rutschgefahr zu minimieren, sind die aktive Sensorfläche sowie die Auswerteeinheit der Trittmatte angeordnet. Die druckempfindliche aktive Sensorfläche erstreckt sich unterhalb der Gummimatte 62 über die gesamte ebene Oberfläche 50 der Basis des Trägerkörpers 48 und beschreibt den Wirkbereich des Trittmattenmoduls 42. In einem Ausführungsbeispiel erstreckt sich der Wirkbereich über die gesamte ebene Oberfläche 50 des Trägerkörpers 48. Es versteht sich, dass ein einzelnes Trittmattenmodul 42 als eigenständige Trittmatte verwendet werden kann, ohne dass es in einem Verbund verlegt werden muss.

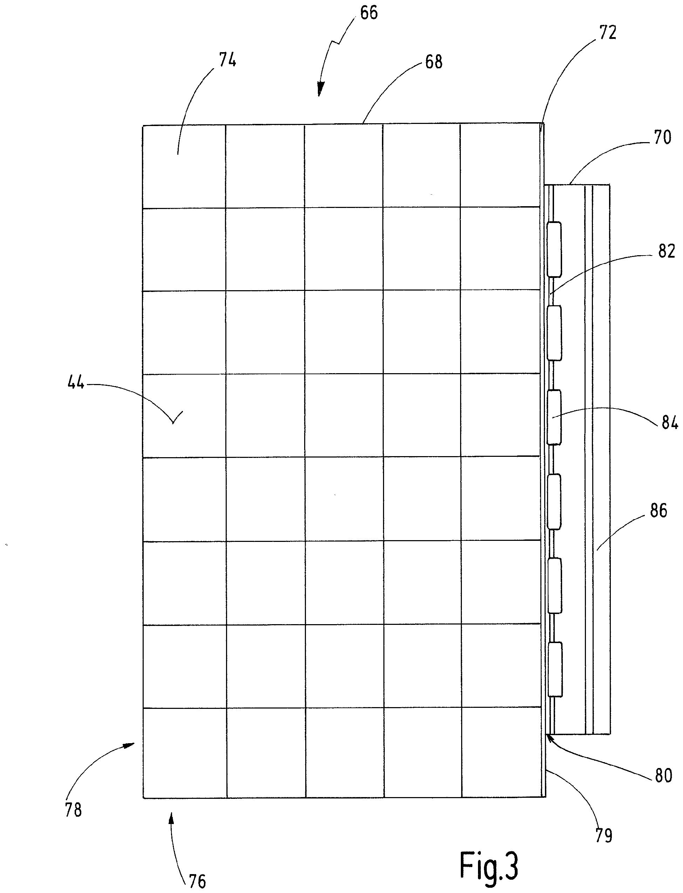

Fig. 3 zeigt ein bevorzugtes Ausführungsbeispiel eines Sensors 66 für ein Trittmattenmodul 42. Der Sensor 66 weist neben einer matrixartigen Sensoranordnung 68, welche die aktive Sensorfläche 44 bildet, einen Anschlussbereich 70 auf, über den die Sensoranordnung 68 mit einer Auswerteeinheit verbindbar ist. Die Sensoranordnung 68 und der Anschlussbereich 70 des Sensors 66 sind aus einem gemeinsamen Trägermaterial 72 gefertigt. Das Trägermaterial 72 ist vorzugsweise ein flexibles, textilartiges Gewebe, in das elektrische Strukturen eingewoben sind. Die elektrischen Strukturen in dem Gewebe entstehen durch die Verwendung von leitfähigem und nicht leitfähigem Garn. Das Trägermaterial 72 ist so flexibel, dass es sich wie eine Stoffbahn einrollen und falten lässt. Neben dem Trägermaterial 72 weist die Sensoranordnung 68 ein weiteres stoffartiges Material auf, das im Wesentlichen die druckempfindlichen Eigenschaften der Sensoranordnung 68 bestimmt.

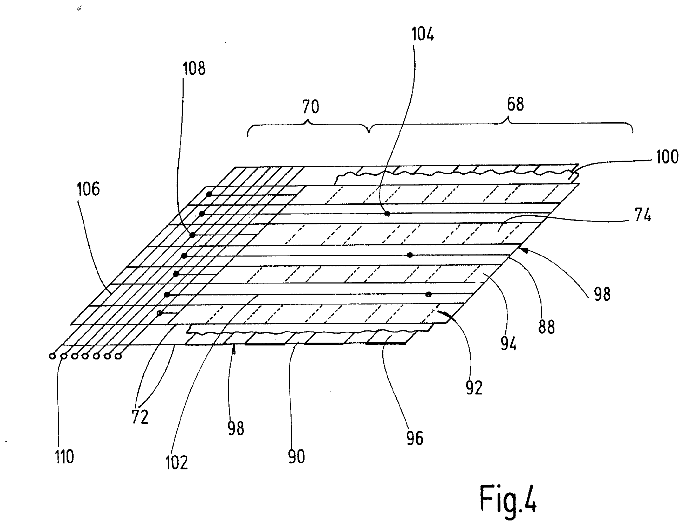

Die Sensoranordnung 68 ist aus dem Trägermaterial 72, den elektrischen Strukturen auf dem Trägermaterial 72 und dem druckempfindlichen Material gebildet. Die elektrischen Strukturen bilden einzelne Sensorzellen 74, die matrixartig in Reihen 76 und Spalten 78 angeordnet sind. Die mechanische Belastung kann für jede Sensorzelle 74 bestimmt werden, um insgesamt eine Druckverteilung über die Sensoranordnung 68 und damit insgesamt über die aktive Sensorfläche 44 zu bestimmen, wie anhand von Fig. 4 noch näher erläutert wird.

Der Anschlussbereich 70 ist in diesem Ausführungsbeispiel an einer Seitenkante 79 der Sensoranordnung 68 ausgebildet. In anderen Ausführungsbeispielen kann der Anschlussbereich 70 auch an mehreren Seitenkanten der Sensoranordnung 68 ausgebildet sein. Der Anschlussbereich 70 ist eine Verlängerung des Trägermaterials 72 und der elektrischen Strukturen darauf. Mit anderen Worten sind die Sensoranordnungen 68 und der Anschlussbereich 70 im Wesentlichen aus einem Stück gefertigt. Der Anschlussbereich 70 ist ebenfalls flexibel ausgebildet. An einer Knickkante 80, die entlang der Seitenkante 79 der Sensoranordnung 68 am Übergang zum Anschlussbereich 70 verläuft, ist der Anschlussbereich 70 faltbar. Der Anschlussbereich 70 ist dazu ausgebildet, an der Knickkante 80 umgelegt zu werden, d.h. an der Knickkante 80 kann der Anschlussbereich 70 unter die Sensoranordnung 68 gefaltet werden. In der Fig. 3 ist der Sensor nicht gefaltet dargestellt.

Der Anschlussbereich 70 kann sich über die gesamte Länge einer Seitenkante 79 der Sensoranordnung 68 erstrecken oder, wie im Ausführungsbeispiel gemäß Fig. 3, nur über einen Teilbereich der Seitenkante 79. In einem von der Seitenkante 79 ausgehenden Umlegebereich 82 weist der Anschlussbereich 70 Aussparungen 84 auf. Der Umlegebereich 82 erstreckt sich von der Knickkante 80 über dessen gesamte Länge vorzugsweise 1 bis 2 cm in den Anschlussbereich 70 hinein. Die Aussparungen 84 sind Durchgangsöffnungen im Anschlussbereich 70 und auf einer Geraden parallel zur Knickkante 80 angeordnet. Vorzugsweise sind die Aussparungen 84 rechteckige, schlitzartige Ausnahmen im Trägermaterial 72, die im Umlegebereich 82 angeordnet sind.

Der Anschlussbereich 70 weist ferner einen Kontaktierungsbereich 86 auf. Im Kontaktierungsbereich 86 können die elektrischen Strukturen kontaktiert werden, um eine elektrische Verbindung zu einer Auswerteeinheit herstellen zu können. Vorzugsweise sind im Kontaktierungsbereich 86 isolierte Kabel in das Trägermaterial 72 eingewoben, wobei an den Stellen, an denen eine Kontaktierung mit den elektrischen Strukturen erfolgen soll, die Isolierung der Kabel entfernt worden ist. Dies kann beispielsweise über nachträgliches, punktgenaues Ablasern der Isolierungen der Kabel erfolgen. Die Sensoranordnung 68 sowie deren elektrische Kontaktierung sind in der Fig. 4 näher erläutert.

Fig. 4 zeigt in einer schematischen Darstellung ein Ausführungsbeispiel einer Sensoranordnung 68 sowie dessen elektrische Kontaktierung in einem Anschlussbereich 70. Die Sensoranordnung 68 weist eine erste Schicht 88 und eine zweite Schicht 90 auf, die je aus dem Trägermaterial 72 gefertigt sind. Auf der ersten Schicht 88 und der zweiten Schicht 90 sind elektrische Strukturen, wie zuvor beschrieben, angeordnet. Die elektrischen Strukturen der ersten und zweiten Schicht 88, 90 sind aus streifenartigen Elektroden 92, 94, 96 gebildet. Die Elektroden der jeweiligen Schicht sind parallel zueinander angeordnet und durch isolierende Zwischenbereiche 98 voneinander beabstandet. Vorzugsweise sind die erste Schicht 88 und die zweite Schicht 90 aus einem Stück gefertigt, das nach der Fertigung in zwei Teile geteilt worden ist, wobei die beiden Teile um 90° verdreht zueinander übereinandergelegt worden sind, um die matrixartige Sensoranordnung 68 zu bilden.

Zwischen der ersten Schicht 88 und der zweiten Schicht 90 ist eine weitere Schicht 100 aus druckempfindlichem Material angeordnet. Vorzugsweise ist die weitere Schicht 100 aus nicht gewobenem, leitfähigem Stoff. Besonders bevorzugt ist die weitere Schicht 100 ein nicht gewobenes Mikrofasertuch, welches mit einer leitfähigen Beschichtung überzogen ist. Das druckempfindliche Material der weiteren Schicht 100 ist so ausgebildet, dass es bei mechanischer Belastung die elektrischen Eigenschaften zwischen zwei sich gegenüberliegenden Elektroden verändert..

Die Sensorzellen 74 der Sensoranordnung 68 sind in den Überlappungsbereichen (hier gestrichelt dargestellt) der Elektroden 92, 94 der ersten Schicht 88 und den Elektroden 96 der zweiten Schicht 90 ausgebildet. Es versteht sich, dass die weiteren Elektroden der ersten und zweiten Schicht weitere Sensorzellen 74 ausbilden. Jede Sensorzelle 74 ist somit über eine Elektrode der ersten Schicht 88 und eine Elektrode der zweiten Schicht 90 kontaktierbar. Zwischen den Elektroden einer Sensorzelle 74 ist das druckempfindliche Material der weiteren Schicht 100 angeordnet, welches die elektrischen Eigenschaften der Sensorzelle 74 bei einer mechanischen Belastung bestimmt. Die elektrische Eigenschaft einer Sensorzelle 74 bestimmt sich vorzugsweise über den spezifischen elektrischen Widerstand der Sensorzelle 74, der über die Elektroden der Sensorzelle 74 gemessen werden kann. Eine Änderung des spezifischen elektrischen Widerstands aufgrund einer mechanischen Belastung der Sensorzelle 74 kann sich auf vielfältige Weise ergeben. So ändert sich in einem Ausführungsbeispiel bei mechanischer Belastung der weiteren Schicht deren spezifischer elektrischer Widerstand im Ort der Belastung. In einem anderen bevorzugten Ausführungsbeispiel ergibt sich die Widerstandsänderung unter Krafteinwirkung aufgrund einer Änderung der Kontaktfläche von den Elektroden der ersten und zweiten Schicht 88, 90 zum leitfähigen Material der weiteren Schicht 100. Bspw. passen sich die erste und zweite Schicht mit den Elektroden 92, 94, 96 bei Belastung dem rauen, leitfähigen Material der weiteren Schicht 100 an, wodurch die Kontaktfläche größer wird und der Widerstand kleiner. Alternativ kann sich eine Widerstandsänderung auch aus einer durch mechanische Belastung resultierender Geometrieänderung des leitfähigen Materials der weiteren Schicht 100 ergeben.

In einem weiteren Ausführungsbeispiel ist das druckempfindliche Material ein elektrisch nicht-leitfähiges flexibles Material, das siebförmig ausgebildet ist und sich unter mechanischer Belastung verformt, sodass sich die erste und zweite Elektrode der ersten Schicht mit der dritten Elektrode in der zweiten Schicht im Bereich der mechanischen Belastung partiell berühren können. Der elektrische Widerstand einer Sensorzelle ist dann abhängig von der Elastizität, der Größe und Form des siebförmigen Gitters. Der elektrische Widerstand einer Sensorzelle bestimmt sich dann aus der Anzahl der Berührungen der durch das druckempfindliche Material beabstandeten Elektroden. Je mehr Berührungspunkte durch das mechanische Belasten des druckempfindlichen Materials im Bereich einer Sensorzelle entstehen, desto geringer ist der elektrische Widerstand der Sensorzelle.

Die Kontaktierung der Elektroden 92, 94 der ersten Schicht 88 und der Elektroden 96 der zweiten Schicht 90 erfolgt vorzugsweise an einer Seite der Sensoranordnung 68. Wie zuvor beschrieben, erfolgt die Kontaktierung in einem Anschlussbereich 70, der aus einer Verlängerung des Trägermaterials 72 der ersten und/oder der zweiten Schicht gebildet ist. Im Ausführungsbeispiel gemäß Fig. 4 sind sowohl das Trägermaterial 72 der ersten Schicht 88 als auch der zweiten Schicht 90 in den Anschlussbereich 70 verlängert. Allerdings sind hier nur die Elektroden der ersten Schicht 88 in den Anschlussbereich 70 verlängert sowie weitere Leiterbahnen 102, die in den Zwischenbereichen 98 der ersten Schicht 88 parallel zu den Elektroden angeordnet sind. Die Leiterbahnen 102 sind wie die Elektroden 92, 94 in das Trägermaterial 72 eingewoben. Die Leiterbahnen 102 können sich wie die Elektroden 92, 94 über die ganze Breite der ersten Schicht 88 erstrecken. Ferner weist die Sensoranordnung 68 Durchkontaktierungen 104 auf, die die weiteren Leiterbahnen 102 mit den Elektroden 96 der zweiten Schicht 90 elektrisch verbinden. Die Durchkontaktierungen 104 sind wie die Elektroden aus leitfähigem Garn, jedoch orthogonal zu der ersten und zweiten Schicht von der ersten Schicht 88 durch die weitere Schicht 100 in die zweite Schicht 90 geführt.

Im Anschlussbereich 70 sind isolierte Kabel 106 angeordnet, die senkrecht zu den Elektroden 92, 94 der ersten Schicht 88 sowie den weiteren Leiterbahnen 102 verlaufen. In einzelnen Kontaktpunkten 108 ist die Isolierung der Kabel 106 entfernt, sodass an diesen Stellen eine elektrische Verbindung zwischen den Elektroden 92, 94 der ersten Schicht oder einer der weiteren Leiterbahnen 102 mit den isolierten Kabeln 106 erfolgen kann. Die isolierten Kabel 106 sind an einer Seite des Anschlussbereichs 70 aus dem Trägermaterial 72 herausgeführt und mit Anschlüssen 110, beispielsweise in Form einer Steckerleiste, versehen. Über die Anschlüsse 110 können die isolierten Kabel 106 und somit die Elektroden 92, 94, 96 der ersten und zweiten Schicht 88, 90 mit einer (hier nicht dargestellten) Auswerteeinheit, die die Widerstände innerhalb der Sensorzellen 74 bestimmen kann, verbunden werden.

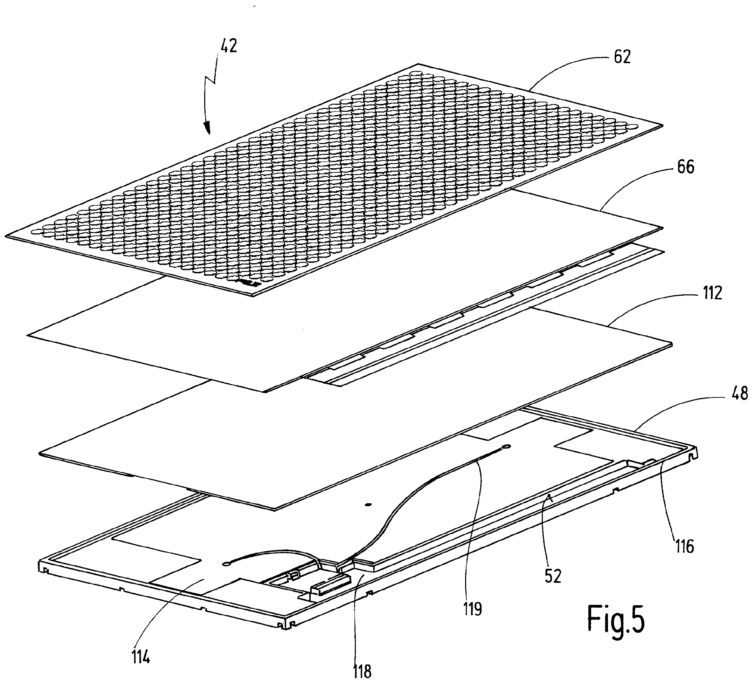

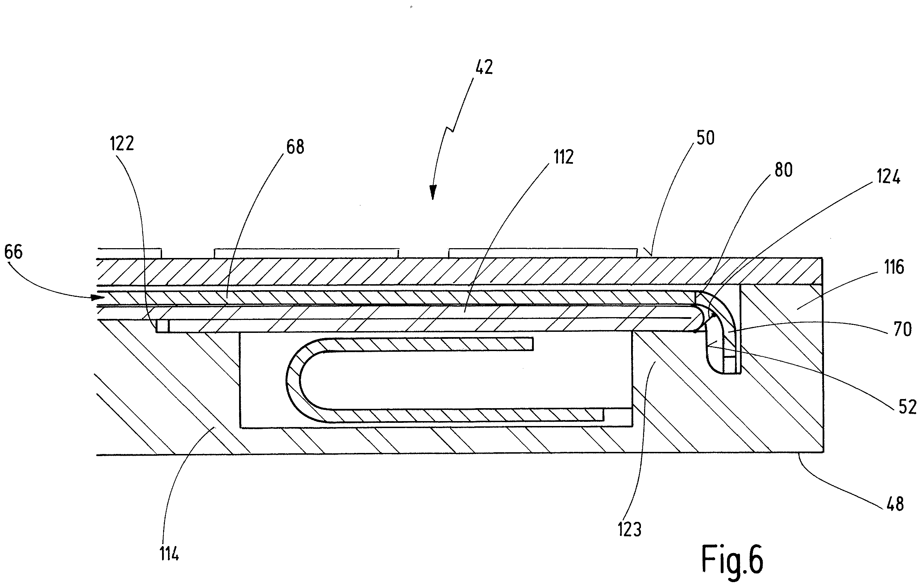

Die Fig. 5 und 6 zeigen in einer Explosionsdarstellung sowie einer Schnittzeichnung den Zusammenbau eines bevorzugten Ausführungsbeispiels eines Trittmattenmoduls 42. Gleiche Bezugszeichen bezeichnen auch hier wieder gleiche Teile.

Fig. 5 zeigt die schichtartige Zusammensetzung des Trittmattenmoduls 42. Die erste Ebene bildet die rutschfeste Gummimatte 62, unterhalb derer der Sensor 66 angeordnet ist. Dieser wiederum liegt auf einer Abdeckplatte 112 auf, die so ausgebildet ist, dass sie in den Trägerkörper 48 eingelegt werden kann. Die Abdeckplatte 112 ist so dimensioniert, dass sie von der Sensoranordnung 68 des Sensors 66 vollständig bedeckt wird, während der Anschlussbereich 70 des Sensors 66 über die Abdeckplatte 112 hinausgeht. Ebenso geht der Anschlussbereich 70 über die Gummimatte 62 hinaus. Im zusammengesetzten Zustand bilden somit die Gummimatte 62, die Abdeckplatte 112 und die Sensoranordnung 68 einen Schichtenverbund, aus dem der Anschlussbereich 70 hervorsteht.

In diesem bevorzugten Ausführungsbeispiel weist der Trägerkörper 48 eine Basis 114 mit einem umlaufenden, vorstehenden Rand 116 auf. Die Abdeckplatte 112 und die Sensoranordnung 68 liegen auf dem Trägerkörper auf. Die Fixierung der Abdeckplatte auf dem Trägerkörper erfolgt kraftschlüssig bzw. stoffschlüssig über mehrere Klebestellen, deren Durchmesser und Tiefe als Bohrung in dem Trägerkörper 48 so gewählt sind, dass einerseits unterschiedliche Wärmedehnungen ausgeglichen werden und andererseits die Zugkräfte der Klebeschicht bei Temperaturänderung nicht zu einem Verzug der Trittmatte führen. In einem anderen Ausführungsbeispiel kann die Abdeckplatte 112 auch durch einen Formschluss mit dem Rand 116 fixiert sein. Ferner kann die Abdeckplatte 112 einen oder mehrere Einpressbolzen und der Trägerkörper entsprechende Bohrungen aufweisen, um die Abdeckplatte 112 in Bezug zum Trägerkörper 48 zu orientieren.

Die Gummimatte 62 geht über die Abdeckplatte 112 und die Sensoranordnung 68 soweit hinaus, dass durch die Gummimatte 62 auch die Oberseite des Rands 116 bedeckt ist. Die Abdeckplatte 112 und die Sensoranordnung 68 sind auf diese Weise innerhalb des Trägerkörpers 48, vorzugsweise wasser- und staubdicht, verschlossen, indem die Gummimatte 62 auf der Oberseite des Rands 116 verklebt ist. In die Basis 114 sind Strukturen 118 in Form von Ausnahmen eingearbeitet, in denen die Elektronik des Trittmattenmoduls 42, beispielsweise die Auswerteeinheit, angeordnet sein können. Die Strukturen 118 können weiterhin Aussparungen für Kabelstränge 119 aufweisen, um die Elektronik nach außen hin zu verbinden.

Fig. 6 zeigt einen Schnitt durch ein Trittmattenmodul 42 quer zu einer Knickkante 80 des Sensors 66. Die Sensoranordnung 68 liegt auf einer Abdeckplatte 112 auf, die wiederum auf dem Trägerkörper 48 aufliegt. Die Abdeckplatte 112 kann eine starres Blech sein, welches in diesem Ausführungsbeispiel an einem Seitenrand um 180° gefaltet ist, wobei der gefaltet Abschnitt in eine Falz im Trägerkörper 48 formschlüssig eingreift, um das Blech auf dem Trägerkörper zu fixieren. Der Anschlussbereich 70 ist um eine zur Oberfläche 50 senkrecht stehende Seitenfläche 52 in einem Umlenkradius 124 umgelegt. Der Umlenkradius 124 beträgt vorzugsweise zwischen 0,2 cm und 1 cm. Beim Umlegen wird ein Vorsprung 123 des Trägerkörpers 48 durch die Aussparung 84 im Anschlussbereich geführt, auf dem die Abdeckplatte 112 aufliegt. Eine Kraft, die senkrecht auf die Oberfläche 50 einwirkt, wirkt somit nicht auf den Anschlussbereich 70, sondern wird über den Vorsprung 123 am Anschlussbereich 70 vorbei auf den Trägerkörper 48 übertragen. Der Anschlussbereich 70 ist somit beim Auftreten einer Person unbelastet.

In dem bevorzugten Ausführungsbeispiel nach Fig. 6 weist der Trägerkörper 48 zusätzlich einen Rand 116 auf, der den Trägerkörper umläuft. Auf den Rand 116 ist die rutschfeste Gummimatte 62 aufgelegt, wodurch das Innere des Trägerkörpers 48 verschlossen ist. In einem anderen Ausführungsbeispiel können die Sensoranordnung 68 und die Abdeckplatte 112 auch bis über den Rand geführt werden, sodass der Anschlussbereich 70 um den Rand 116 umgelegt und ins Innere des Trägerkörpers 48 geführt ist. Der Rand 116 weist in diesem Fall ein nutenartiges Profil auf, in das die Aussparungen 84 des Anschlussbereichs 70 eingreifen können, sodass auch hier eine auf die Oberfläche 50 einwirkende Kraft um den Anschlussbereich 70 herumgeführt wird.

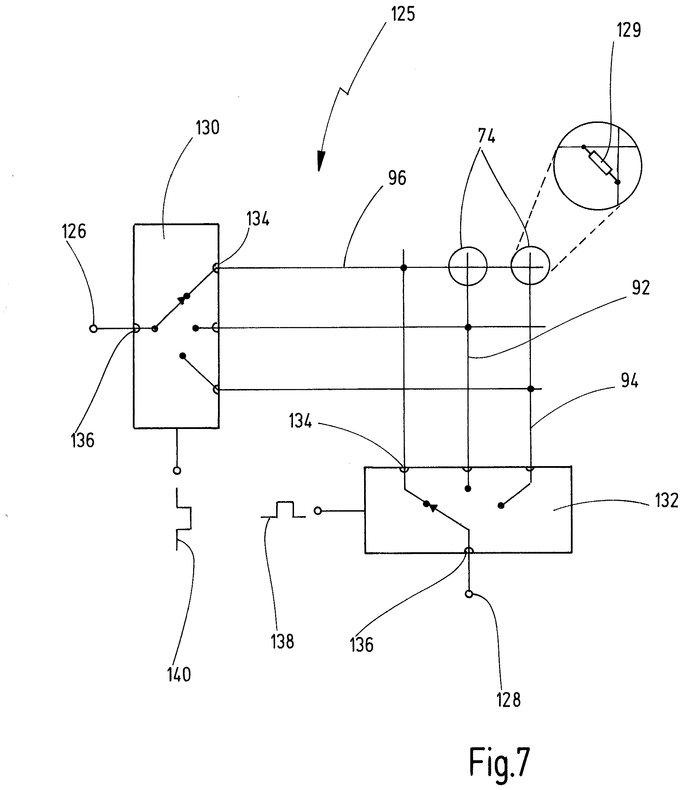

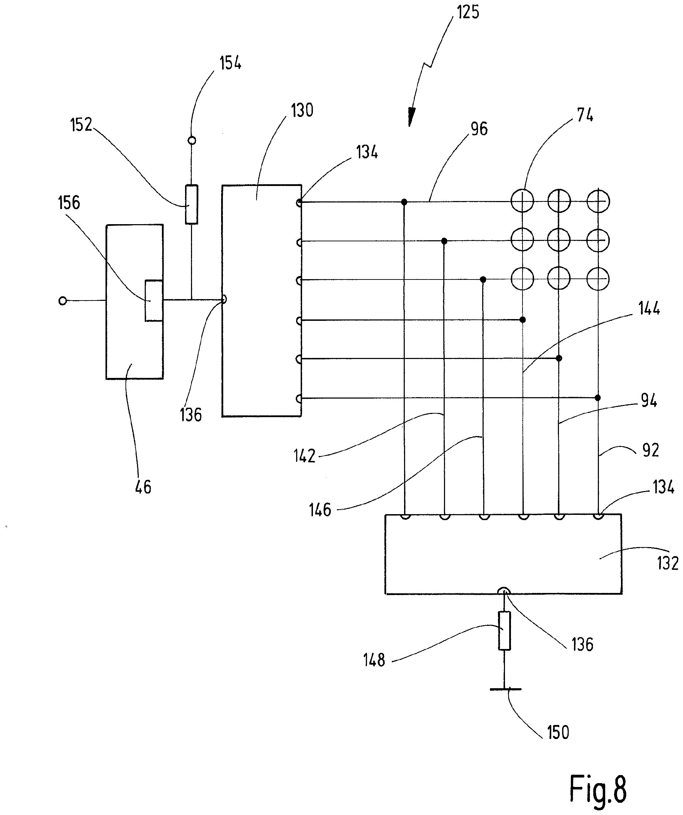

Fig. 7 und 8 zeigen zwei Ausführungsbeispiele zur Kontaktierung des Sensors 66 eines Signalgebers 10, 12 in einer schematischen Darstellung.

Fig. 7 zeigt eine erste und zweite Sensorzelle 74, die über eine Schaltungsanordnung 125 mit einem ersten Anschluss 126 und einem zweiten Anschluss 128 mit einer hier nicht näher dargestellten Auswerteeinheit verbindbar sind. Die Sensorzellen 74 sind aus einer ersten Elektrode 92, einer zweiten Elektrode 94 und einer dritten Elektrode 96 gebildet. Zwischen den Elektroden einer Sensorzelle 74 ist ein Widerstand 129 bestimmbar, der wie zuvor erläutert von der mechanischen Belastung der Sensorzelle 74 abhängig ist.

Die Elektroden 92, 94, 96 sind mit einem ersten Sequentialisierungselement 130 und einem zweiten Sequentialisierungselement 132 verbunden. Das erste und das zweite Sequentialisierungselement 130, 132 sind dazu ausgebildet, eine Vielzahl von Anschlüssen an einen Anschluss 126, 128 zusammenzuführen. Die Sequentialisierungselemente 130, 132 sind vorzugsweise als Drehschalter, sogenannte Multiplexer, ausgebildet. Ein Sequentialisierungselement 130, 132 weist eine Vielzahl von Eingängen 134 sowie einen Ausgang 136 auf. Bei einem Sequentialisierungselement 130, 132 ist zu einem bestimmten Zeitpunkt der eine Ausgang 136 immer mit einem Eingang der Eingänge 134 verbunden. Das Umschalten zwischen den einzelnen Eingängen 134 erfolgt durch einen externen Trigger 138, 140. Der externe Trigger 138, 140 kann von der Auswerteeinheit gezielt bereitgestellt werden oder durch ein Taktsignal vorgegeben sein. Im letzteren Fall ist der Takt des Triggers 138 des zweiten Sequentialisierungselements 132 um einen Faktor größer als der Takt des Triggers 140 des ersten Sequentialisierungselements 130. Das Verhältnis ist so gewählt, dass das erste Sequentialisierungselement 130 einen ersten Eingang der Eingänge 134 mit dem Ausgang 136 verbindet, während das zweite Sequentialisierungselement in derselben Zeit alle Eingänge 134 einmal an den Ausgang 136 schaltet. So können auf einfache Weise nacheinander alle Sensorzellen 74 abgefragt werden, indem die jeweiligen Elektroden durch das erste und das zweite Sequentialisierungselement 130, 132 mit deren Ausgängen 136 verbunden werden.

Das erste und das zweite Sequentialisierungselement 130, 132 sind an ihren Eingängen 134 überbelegt, d.h. das erste Sequentialisierungselement 130 ist nicht nur mit den Elektroden 92, 94 der ersten Schicht 88, sondern auch mit den Elektroden 96 der zweiten Schicht 90 verbunden. Das zweite Sequentialisierungselement 132 ist nicht nur mit den Elektroden 96 der zweiten Schicht 90, sondern auch mit den Elektroden 92, 94 der ersten Schicht 90 verbunden. Wie in Fig. 7 dargestellt, können die Ausgänge 136 mit derselben Elektrode (hier die dritte Elektrode 96) verbunden sein. Mit anderen Worten werden bei einer derartigen Schalterstellung des ersten und zweiten Sequentialisierungselements 130, 132 die Sensorzellen 74 "überbrückt". Es besteht somit eine direkte Verbindung zwischen den Ausgängen 136 des ersten Sequentialisierungselements 130 und des zweiten Sequentialisierungselements 132.

Dieser "Kurzschluss" kann messtechnisch von einer an den ersten und zweiten Anschlüssen 126, 128 angeschlossenen Auswerteeinheit bestimmt werden. Schalten das erste und das zweite Sequentialisierungselement 130, 132 ordnungsgemäß, kann die Auswerteeinheit den entsprechenden Kurzschluss zwischen dem ersten Anschluss 126 und dem zweiten Anschluss 128 bestimmen. Für einen Selbsttest der Sequentialisierungselemente 130, 132 werden diese in Intervallen kurzgeschlossen und der Kurzschluss von der Auswerteeinheit abgefragt. Auf diese Weise können die Sequentialisierungselemente 130, 132 als Teil der Signalverarbeitungskette des Signalgebers kontinuierlich auf ihre Funktionsfähigkeit hin überprüft werden.

Fig. 8 zeigt ein besonders bevorzugtes Ausführungsbeispiel zur Kontaktierung eines matrixartigen Sensors 66. In dem Ausführungsbeispiel gemäß Fig. 8 sind neun Sensorzellen 74 über ein erstes Sequentialisierungselement 130 und ein zweites Sequentialisierungselement 132 mit einer Auswerteeinheit 46 verbunden. Die Schaltungsanordnung 125 weist neben der ersten, zweiten und dritten Elektrode 92, 94, 96 drei weitere Elektroden 142, 144, 146 auf, die die weiteren Sensorzellen 74 kontaktieren. Wie im Ausführungsbeispiel zuvor sind alle Elektroden 92, 94, 96, 142, 144, 146 je mit den Eingängen134 des ersten Sequentialisierungselements 130 und des zweiten Sequentialisierungselements 132 verbunden. So können nicht nur jeweils die zwei Elektroden einer Sensorzelle 74 mit den Ausgängen 136 verbunden werden, sondern auch direkte Verbindungen in zuvor erwähnter Weise erzeugt werden.

Im Ausführungsbeispiel gemäß Fig. 8 ist der Ausgang 136 des zweiten Sequentialisierungselements 132 über einen ersten Widerstand 148 mit einem elektrischen Masseanschluss 150 verbunden. Der Ausgang 136 des ersten Sequentialisierungselements 130 ist einerseits über einen zweiten Widerstand 152 mit einer Spannungsquelle 154 verbunden und andererseits ist der Ausgang 136 des ersten Sequentialisierungselements 130 mit einem Analog-Digital-Wandler (ADC) 156 der Auswerteeinheit 46 verbunden. Somit entsteht ein Spannungsteiler zwischen dem zweiten Widerstand 152 und dem ersten Widerstand 148 bzw. ein Spannungsteiler zwischen dem zweiten Widerstand 152 und der Summe aus dem zweiten Widerstand 152 und dem Widerstand 129der Sensorzelle 74, auf die das erste und das zweite Sequentialisierungselement 130, 132 geschaltet sind. Mit anderen Worten, wenn das erste Sequentialisierungselement 130 und das zweite Sequentialisierungselement 132 "kurzgeschlossen" sind, stellt sich am Analog-Digital-Konverter 156 eine definierte Spannung ein, die sich aus dem Spannungsteiler des ersten und zweiten Widerstands 148, 152 und der Spannung der Spannungsquelle 154 ergibt. Andererseits lässt sich der spezifische Widerstand 129einer Sensorzelle 74 einfach durch die Abweichung von diesem Erwartungswert bestimmen.

Auf diese Weise ist es besonders einfach möglich, mittels der Auswerteeinheit 46 den aktuellen Widerstand einer Sensorzelle 74 und damit die entsprechende Druckbelastung einer Sensorzelle 74 zu bestimmen. Ferner können die Sequentialisierungselemente 130, 132 auf einfache Weise hinsichtlich ihrer Adressierung überprüft werden. Zusätzliche Einrichtungen zur Überwachung der Sequentialisierungselemente 130, 132 sind nicht notwendig.

Darüber hinaus kann auch der Analog-Digital-Wandler 156 auf seinen ordnungsgemäßen Betrieb hin überprüft werden, wenn der erste Widerstand 148 und der zweite Widerstand 152 jeweils variabel einstellbar sind. Durch den variablen Spannungsteiler, der vorliegt wenn das erste und das zweite Sequentialisierungselement 130, 132 auf dieselbe Elektrode geschaltet sind, kann der gesamte Bereich des Analog-Digital-Wandlers 156 überprüfbar gemacht werden. Die Auswertung der Sensorzellen 74 sowie die Überwachung der Sequentialisierungselemente und/oder des Analog-Digital-Wandlers 156 können über einen Anschluss 158 einer übergeordneten Steuereinheit zur weiteren Verarbeitung übergeben werden.

In einem Ausführungsbeispiel ist die Auswerteeinheit 46 als OSSD ausgebildet, d.h. das Ausgangssignal am Ausgang 158 ist ein OSSD-Signal, welches einen ersten Zustand und einen zweiten Zustand anzeigen kann. Vorzugsweise handelt es sich um ein redundantes Taktsignal, mit zwei Komponenten, die nicht synchron zueinander sind. Der erste Zustand zeigt einen sicheren Zustand des Signalgebers an, d. h. einen Zustand, in dem weder eine Sensorzelle 74 belastet ist noch ein Fehler bei den Sequentialisierungselementen 130, 132 oder dem Analog-Digital-Wandler 156 erkannt worden ist. Der erste Zustand wird aktiv signalisiert, d. h. in diesem Zustand muss das redundante Signal anliegen. Der zweite Zustand wird durch das Ausbleiben des redundanten Taktsignals signalisiert und gibt an, dass entweder eine Sensorzelle 74 belastet worden ist oder ein Fehler bei den Sequentialisierungselementen 130, 132 oder des Analog-Digital-Wandlers 156 vorliegt.

In einem anderen Ausführungsbeispiel ist das Ausgangssignal der Auswerteeinheit 46 ein kodiertes Signal, welches Informationen beinhaltet, welche Sensorzelle 74 belastet bzw. unbelastet ist. Ebenso können die Ergebnisse der Selbsttests der Sequentialisierungselemente 130, 132 und des Analog-Digital-Wandlers 156 an ein Sicherheitssystem übertragen werden, so dass einerseits eine gezielte Auswertung der Berührung des Sensors 66 erfolgen kann und andererseits eine Diagnosemeldung generiert werden kann, die auf die Funktionsfähigkeit des Sensors 66 und dessen Signalverarbeitung hindeutet.

Vorstellbar sind auch Zwischenformen zwischen den letzten beiden Ausführungsbeispielen, beispielsweise indem von der Auswerteeinheit ein OSSD-Signal bereitgestellt wird und gleichzeitig über einen zweiten Ausgang die Diagnosedaten bereitgestellt werden. Es versteht sich, dass das Ausführungsbeispiel gemäß Fig. 8 auf eine beliebige Zahl von Sensorzellen 74 ausgedehnt werden kann und die Erfindung nicht auf die gezeigten neun Sensorzellen beschränkt ist.

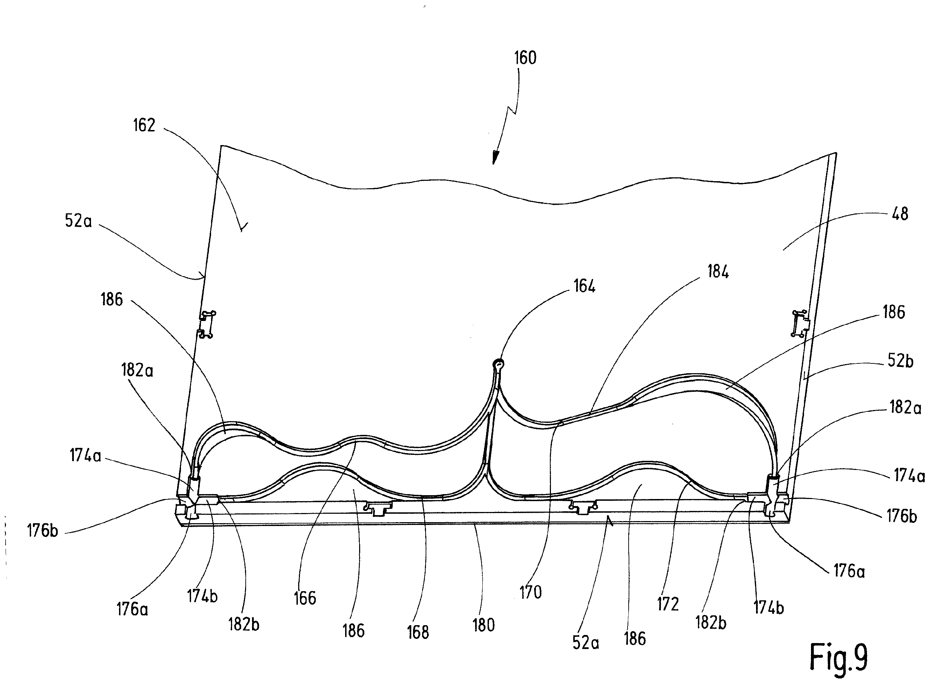

Fig. 9 zeigt ein bevorzugtes Ausführungsbeispiel einer Unterseite einer neuen Trittmatte in einer perspektivischen Darstellung. Die Unterseite 160 der Trittmatte entspricht der Unterseite des Trägerkörpers 48. Im Wesentlichen weist die Unterseite 160 eine ebene Oberfläche 162 auf, in die Strukturen eingearbeitet sind, um eine Kontaktierung der im Trägerkörper 48 innenliegenden Elektronik zu ermöglichen. Die Strukturen werden beispielsweise durch einen Oberflächenfräsvorgang in die ebene Oberfläche 162 eingearbeitet oder unmittelbar beim Herstellen des Trägerkörpers 48, bspw. beim Spritzgießen, gebildet.

Im Ausführungsbeispiel gemäß Fig. 9 weisen die Strukturen eine Durchgangsöffnung 164, eine erste, zweite, dritte und vierte Kabelführung 166, 168, 170, 172 sowie Fassungen 174a, 174b in Form von Senken in der Unterseite 160 auf. Die Durchgangsöffnung 164 ist eine zur ebenen Oberfläche 162 senkrechte Öffnung, vorzugsweise in Form einer Bohrung, die sich durch den Trägerkörper 48 erstreckt. Durch die Durchgangsöffnung 164 kann eine Verbindung zu einer innerhalb des Trägerkörpers 48 liegenden Elektronik, wie beispielsweise die Auswerteeinheit der Trittmatte, hergestellt werden. In einem bevorzugten Ausführungsbeispiel ist durch die Durchgangsöffnung 164 ein hier nicht dargestelltes Kabel geführt. Das Kabel ist vorzugweise ein mehradriges Kabel mit einer schützenden Ummantelung. Alternativ ist auch die Verwendung eines vorkonfektionierten Kabelbaums denkbar.

Das Kabel ist vorzugsweise in der Durchgangsöffnung 164 fixiert und die Durchgangsöffnung 164 im Übrigen durch eine Dichtung oder Füllung staub- und wasserdicht versiegelt, sodass eine hohe Schutzart, beispielsweise IP67, gewährleistet werden kann. Durch die Fixierung weist der Teil des Kabels, der aus der Durchgangsöffnung 164 aus dem Trägerkörper 48 heraustritt, eine definierte, feste Länge auf, an dessen Ende ein Steckverbinder angeordnet ist. Der Steckverbinder ist vorzugweise ein mehrpoliger Rundsteckverbinder in M5, M8 oder M12. In einem bevorzugten Ausführungsbeispiel weist der Steckverbinder eine Schraubverriegelung nach DIN EN 61076-2-104 oder Schnappverriegelung auf. Der Steckverbinder kann eine Schutzart IP65/IP67 aufweisen, bspw. indem der Steckverbinder am Kabel umspritzt ist. Besonders bevorzugt ist der Steckverbinder in einem 360° EMV-sicher geschirmt Metallgehäuse angeordnet, um eine hohe Zuverlässigkeit eine Signalübertragung zu gewährleisten.

Die Fassungen 174a, 174b bilden Aufnahmen für die Steckverbinder. Die Form einer Fassung 174a, 174b ist der Form eines Steckverbinders angepasst. Vorzugsweise ist eine Fassung 174a, 174b eine längliche Senke mit einem halbrunden Querschnitt, in die ein Rundsteckverbinder einclipsbar ist, sodass der Steckverbinder in der Senke gehalten wird. Die Fassungen 174a, 174b münden auf einer Seite in einer Aussparung 176a, 176b in den Seitenflächen 52a, 52b und gehen auf der gegenüberliegenden Seite in eine der Kabelführungen 166, 168, 170, 172 über. Besonders bevorzugt sind jeweils zwei Fassungen 174a, 174b kreuzförmig zueinander in einem Eckbereich, in dem die erste und zweite Seitenflächen 52a, 52b aneinander treffen, angeordnet. Vorzugweise sind die Abstände, in denen die Aussparungen 176a, 176b der beiden Fassungen 174a, 174b von der Stoßkante 178 der beiden Seitenflächen 52a, 52b entfernt sind, gleich groß, sodass sich die Aussparungen 176a, 176b zweier benachbarter Trittmatten gegenüberliegen, wenn die Trittmatten bündig aneinander stoßen. In einem bevorzugten Ausführungsbeispiel mit einem quaderförmigen Trägerkörper sind in allen vier Ecken sich überschneidende Fassungen angeordnet mit Aussparungen jeweils in einem festen Abstand zu den Seitenkanten des quaderförmigen Trägerkörpers. Damit lassen sich die Trittmatten besonders flexibel miteinander kombinieren und zu einem Verbund zusammenfügen.

Die Fassungen 174a, 174b sind über Kabelführungen 166, 168, 170, 172 mit der Durchgangsöffnung 164 verbunden. Im Ausführungsbeispiel nach Fig. 9 ist die Durchgangsöffnung 164 bezogen auf eine Stirnseite 180 der Trittmatte mittig angeordnet. Zwei Fassungen 174a sind hier mit einer ersten Orientierung angeordnet, in der die Aussparungen 176a der Fassungen 174a in den Seitenflächen 52a liegen, wobei zwei weitere Fassungen 174b in einer zweiten Orientierung angeordnet sind, sodass deren Aussparungen 176b in den Seitenflächen 52b liegen. Vorzugsweise stehen die erste und zweite Orientierung in einem 90° Winkel zueinander, wenn der Trägerkörper 48 rechtwinklig ist. Die Übergänge 182a, 182b von den Fassungen 174a, 174b in die Kabelführungen 166, 168, 170, 172 sind in einem ersten und einem zweiten Abstand zur Durchgangsöffnung 164 angeordnet, wobei der erste Abstand und der zweite Abstand unterschiedlich groß sind. An den Übergängen 182a, 182b ist eine Kante ausgebildet, sodass ein in die Fassungen 174a, 174b eingelegter Steckverbinder nicht in die Kabelführungen 166, 168, 170, 172 gleiten kann.

In die Kabelführungen 166, 168, 170, 172 ist ein aus der Durchgangsöffnung 164 austretendes Kabel einlegebar. Die Kabelführungen 166, 168, 170, 172 bilden Kanäle in der ebenen Oberfläche 162, die von der Durchgangsöffnung 164 bis zu den Übergängen 182a, 182b verlaufen. Die Kanalwände sind abgerundet, wobei die Rundung so ausgebildet ist, dass eine Oberfläche des Kabels zumindest teilweise bündig an den Kanalwänden anliegt. Eine Tiefe der Kanäle ist so gewählt, dass ein Kabel in den Kanälen vollständig hineingelegt werden kann und somit nicht aus der ebenen Oberfläche 162 hervorsteht. Vorzugsweise weisen die Kanäle im Querschnitt ein tonnenförmiges Profil auf. In einem anderen Ausführungsbeispiel ist das Profil U-förmig, wobei die unteren Ecken abgerundet sind.

Die Kanäle weisen in einem Ausführungsbeispiel eine Länge auf, die der definierten Länge des aus der Durchgangsöffnung 164 austretenden Kabels entspricht. Die Kanäle der einzelnen Kabelführungen 166, 168, 170, 172 sind vorzugsweise gleich lang. Der Verlauf der Kabelführungen 166, 168, 170, 172 ist kurvenförmig mit großen Krümmungsradien und weist keine Ecken auf. Der Verlauf ist knickfrei. Vorzugsweise sind die Radien größer als 10 cm. Im Ausführungsbeispiel gemäß Fig. 9 ist der kurvenförmige Verlauf einer Kabelführung 166, 168, 170, 172 aus verschiedenen Abschnitten zusammengesetzt. Die Abschnitte können gerade oder bogenförmige Abschnitte sein. Vorzugsweise sind zwischen den Abschnitten Übergangsbögen angeordnet, die so ausgebildet sind, dass beim Übergang von einem geraden Abschnitt in einen kreisbogenförmigen Abschnitt die Kurve nur langsam und nicht sprungartig enger wird. Der kurvenförmige Verlauf ermöglicht es, dass auch steife Kabel mit einer geringen Flexibilität gleichmäßig in die Kabelführungen eingelegt und somit sicher verstaut werden können. Insbesondere wird die Gefahr verringert, dass beim Knicken der Kabel eine Ader bricht oder mehrere Adern bis zu einem Querschluss zusammengequetscht werden.

In einem Ausführungsbeispiel ist das Kabel ohne Spiel in den Kabelführungen 166, 168, 170, 172 verlegt. In einem anderen bevorzugten Ausführungsbeispiel weisen die Kanäle mindestens einen ersten Abschnitt 184 und einen zweiten Abschnitt 186 auf. Im ersten Abschnitt 184 ist ein Kabel spielfrei verlegbar. Im zweiten Abschnitt 186 wird ein Stauchraum gebildet, indem sich die Kabelführung in diesem Bereich weitet. Vorzugsweise nimmt die definierte Breite der Kabelführungen in einem ersten Bereich des zweiten Abschnitts 186 gleichmäßig zu und in einem anschließenden zweiten Bereich kontinuierlich wieder ab bis hin zu der definierten Breite des ersten Abschnitts 184. Der Stauchraum 186 ist dazu ausgebildet, ein Kabel mit definiertem Spiel zu verlegen, um geringfügige Variationen in der Kabellänge auszugleichen. Die Kombination von Abschnitten mit Stauchräumen 186 und Abschnitten 184 mit passgenauer, spielfreier Kabelführung ermöglichen eine gute Fixierung des Kabels in den Kanälen, wobei gleichzeitig eine gewisse Flexibilität hinsichtlich der Kabellänge durch die Stauchräume 184 gegeben ist.

Die Flexibilität bei der Kabelführung ist von Bedeutung, wenn in einem Ausführungsbeispiel die Fassungen 174a, 174b weitere Strukturen zum Fixieren der Steckverbinder in unterschiedlichen Positionen aufweisen. So ist es denkbar, dass der Steckverbinder innerhalb der Fassung 174a, 174b in einer ersten und einer zweiten Position angeordnet werden kann, wobei in der ersten Position der Steckverbinder mit der Seitenfläche 52a, 52b bündig abschließt und in der zweiten Position der Steckverbinder über die Seitenfläche 52a, 52b hinausgeht bzw. weiter im Inneren des Trägerkörper 48 zum Liegen kommt und somit nicht bündig mit den Seitenflächen 52a, 52b abschließt. In der zweiten Position muss das Kabel zum Steckverbinder länger bzw. kürzer sein, als in der ersten Position. Diese Variation der Länge kann durch die Stauchräume 186 ausgeglichen werden.

Es versteht sich, dass die Ausgestaltung der Unterseite nicht auf die hier gezeigten Ausführungsbeispiele beschränkt ist. Insbesondere kann in anderen Ausführungsbeispielen die Durchgangsöffnung 164 auch außermittig angeordnet sein. Ebenso können weitere Durchgangsöffnungen mit weiteren Kabelführungen sowie Durchgangsöffnungen mit mehreren Kabeln vorgesehen sein, um auch die weiteren Seitenflächen mit Anschlussmöglichkeiten zu versehen. In einem bevorzugt Ausführungsbeispiel wird über eine erste Durchgangsöffnung 164 ein Ausgangssignal der Auswerteeinheit der Trittmatte bereitgestellt und über eine weitere Durchgangsöffnung ein Eingangs- oder Steuersignal aufgenommen. Besonders bevorzugt lassen sich Signale von einer Durchgangsöffnung über die Auswerteeinheit zu einer weiteren Durchgangsöffnung durchschleifen. Damit lässt sich besonders gut ein in Serie geschalteter Verbund von Trittmatten bilden.

## Patentansprüche

1. Trittmatte (10) zum Absichern einer elektrisch angetriebenen Anlage (14) mit einem Sensor (66), einem starren Trägerkörper (48) und einer Auswerteeinheit (46),
wobei der Trägerkörper (48) eine Oberseite (50), eine Unterseite (160) sowie eine erste und eine zweite Seitenfläche (52a, 52b), die an die Oberseite (50) und die Unterseite (160) anschließen, aufweist,
wobei die Auswerteeinheit (46) im Inneren des Trägerkörpers (48) angeordnet ist und dazu ausgebildet ist, ein Ausgangssignal in Abhängigkeit der Betätigung des Sensors (66) bereitzustellen,
wobei der Sensor (66) eine aktive Oberfläche (44) aufweist, welche die Oberseite (50) des Trägerkörpers (48) bedeckt, **dadurch gekennzeichnet, dass** die Unterseite (160) eine Öffnung (164) zur Kontaktierung der Auswerteeinheit (46) im Inneren des Trägerkörpers aufweist,
wobei die erste Seitenfläche (52a) eine erste Aussparung (176a) aufweist und die zweite Seitenfläche (52b) eine zweite Aussparung (176b) aufweist, und
wobei die Unterseite (160) eine erste und zweite Kabelführung (166, 168) aufweist und die erste Kabelführung (166) die Öffnung (164) mit der ersten Aussparung (176a) verbindet und die zweite Kabelführung (168) die Öffnung (164) mit der zweiten Aussparung (176b) verbindet.

2. Trittmatte nach Anspruch 1, wobei die Unterseite (160) eine plane Ebene (162) definiert und die erste und zweite Kabelführung (166, 168) in der Unterseite versenkt sind.

3. Trittmatte nach einem der Ansprüche 1 oder 2, wobei die erste und zweite Kabelführung (166, 168) kanalartige, längliche Vertiefungen in der Unterseite (160) des Trägerkörpers (48) mit einer definierten Länge und einer definierten Breite sind.

4. Trittmatte nach Anspruch 3, wobei die definierte Länge der ersten Kabelführung (166) gleich der definierten Länge der zweiten Kabelführung (168) ist.

5. Trittmatte nach einem der Ansprüche 3 bis 4, wobei die erste Kabelführung (166) einen ersten Abschnitt (184) und einen zweiten Abschnitt (186) aufweist, wobei im ersten Abschnitt (184) die definierte Breite konstant ist und im zweiten Abschnitt (186) die definierte Breite über die Länge des Abschnitts variiert.

6. Trittmatte nach einem der Ansprüche 3 bis 5, wobei die kanalartigen, länglichen Vertiefungen in einem Querschnitt in der Breite ein tonnenförmiges Profil aufweisen.

7. Trittmatte nach einem der Ansprüche 1 bis 6, wobei die erste und zweite Kabelführung (166, 168) so ausgebildet sind, dass die erste Kabelführung (166) die Öffnung (164) und die erste Aussparung (176a) knickfrei verbindet und die zweite Kabelführung (168) die Öffnung (164) und die zweite Aussparung (176b) knickfrei verbindet.

8. Trittmatte nach einem der Ansprüche 1 bis 7, wobei die erste und zweite Kabelführung (166, 168) einen kurvenartigen Verlauf mit variierender Krümmung aufweisen.

9. Trittmatte nach einem der Ansprüche 1 bis 8, wobei die erste Kabelführung (166) einen kurvenartigen Verlauf mit mindestens einem geraden Abschnitt und mit mindestens einem Übergangsbogen aufweist.

10. Trittmatte nach einem der Ansprüche 1 bis 9 wobei die erste Kabelführung (166) und die zweite Kabelführung (168) im Bereich der Öffnung (164) mindestens einen gemeinsamen Abschnitt aufweisen.

11. Trittmatte nach einem der Ansprüche 1 bis 10, wobei die Auswerteeinheit (46) über ein Kabel kontaktiert ist, welches in der Öffnung (164) fixiert ist und welches mit einer definierten Kabellänge aus dem Trägerkörper (48) austritt.

12. Trittmatte nach Anspruch 11, wobei das Kabel einen Steckverbinder aufweist und die Unterseite (160) eine erste Senke (174a) und eine zweite Senke (174b) als Aufnahme für den Steckverbinder aufweist.

13. Trittmatte nach Anspruch 12, wobei die erste Senke (174a) am Ende der ersten Kabelführung (166) angeordnet ist und in der ersten Aussparung (176a) mündet und die zweite Senke (174a) am Ende der zweiten Kabelführung (168) angeordnet ist und in der zweiten Aussparung (176b) mündet.

14. Trittmatte nach einem der Ansprüche 12 bis 13, wobei sich die erste Senke (174a) und zweite Senke (174b) in einem Winkel, vorzugsweise rechtwinklig, überschneiden.

15. Trittmatte nach einem der Ansprüche 12 bis 14, wobei der Steckverbinder eine Anschlussseite aufweist und die erste Senke (174a) so ausgebildet sind, dass der Steckverbinder in einer ersten Position und in einer zweiten Position in die erste Senke (174a) einlegbar ist, wobei in der ersten Position die Anschlussseite des Steckverbinder bündig mit der Seitenfläche (52a) abschließt und in der zweiten Position die Anschlussseite des Steckverbinder unbündig zur Seitenfläche (52a) angeordnet ist.

## Claims

1. Pressure mat (10) for safeguarding an electrically driven installation (14), comprising a sensor (66), a rigid supporting body (48) and an evaluation unit (46),
wherein the supporting body (48) has a top side (50), a rear side (160) and a first and a second side face (52a, 52b), the side faces adjoining the top side (50) and the rear side (160),
wherein the evaluation unit (46) is arranged in the interior of the supporting body (48) and is designed to provide an output signal depending on operation of the sensor (66),
wherein the sensor (66) has an active surface (44) which covers the top side (50) of the supporting body (48),
**characterized in that**
the rear side (160) has an opening (164) for making contact with the evaluation unit (46) in the interior of the supporting body,
wherein the first side face (52a) has a first cavity (176a) and the second side face (52b) has a second cavity (176b), and
wherein the rear side (160) has a first and a second cable guide (166, 168) and the first cable guide (166) connects the opening (164) to the first cavity (176a) and the second cable guide (168) connects the opening (164) to the second cavity (176b).

2. Pressure mat according to Claim 1, wherein the rear side (160) defines a planar level (162) and the first and the second cable guide (166, 168) are recessed in the rear side.

3. Pressure mat according to either of Claims 1 and 2, wherein the first and the second cable guide (166, 168) are channel-like, elongate recesses in the rear side (160) of the supporting body (48) with a defined length and a defined width.

4. Pressure mat according to Claim 3, wherein the defined length of the first cable guide (166) is equal to the defined length of the second cable guide (168).

5. Pressure mat according to either of Claims 3 and 4, wherein the first cable guide (166) has a first section (184) and a second section (186), wherein the defined width is constant in the first section (184) and the defined width varies over the length of the section in the second section (186).

6. Pressure mat according to one of Claims 3 to 5, wherein the channel-like, elongate recesses have in width a barrel-like profile in cross section.

7. Pressure mat according to one of Claims 1 to 6, wherein the first and the second cable guide (166, 168) are designed such that the first cable guide (166) connects the opening (164) and the first cavity (176a) without any kinks and the second cable guide (168) connects the opening (164) and the second cavity (176b) without any kinks.

8. Pressure mat according to one of Claims 1 to 7, wherein the first and the second cable guide (166, 168) have a curved profile with a varying curvature.

9. Pressure mat according to one of Claims 1 to 8, wherein the first cable guide (166) has a curved profile with at least one straight section and with at least one transition bend.

10. Pressure mat according to one of Claims 1 to 9, wherein the first cable guide (166) and the second cable guide (168) have at least one common section in the region of the opening (164).

11. Pressure mat according to one of Claims 1 to 10, wherein contact is made with the evaluation unit (46) by means of a cable which is fixed in the opening (164) and which exits from the supporting body (48) with a defined cable length.

12. Pressure mat according to Claim 11, wherein the cable has a plug connector and the rear side (160) has a first hollow (174a) and a second hollow (174b) as receptacles for the plug connector.

13. Pressure mat according to Claim 12, wherein the first hollow (174a) is arranged at the end of the first cable guide (166) and opens in the first cavity (176a) and the second hollow (174a) is arranged at the end of the second cable guide (168) and opens in the second cavity (176b).

14. Pressure mat according to either of Claims 12 and 13, wherein the first hollow (174a) and the second hollow (174b) intersect at an angle, preferably at a right angle.

15. Pressure mat according to one of Claims 12 to 14, wherein the plug connector has a connection side and the first hollow (174a) and the second hollow (174b) are configured such that the plug connector can be inserted into the first hollow (174a) in a first position and in a second position, wherein the connection side of the plug connector terminates flush with the side face (52a) in the first position and the connection side of the plug connector is not arranged flush with respect to the side face (52a) in the second position.

## Revendications

1. Tapis sensible (10) destiné à sécuriser un équipement (14) à entraînement électrique,
comprenant un capteur (66), un corps porteur rigide (48) et une unité d'interprétation (46), le corps porteur (48) possédant un côté supérieur (50), un côté inférieur (160) ainsi qu'une première et une deuxième surface latérale (52a, 52b) qui se rattachent au côté supérieur (50) et au côté inférieur (160),
l'unité d'interprétation (46) étant disposée à l'intérieur du corps porteur (48) et étant configurée pour délivrer un signal de sortie en fonction de l'actionnement du capteur (66), le capteur (66) possédant une surface active (44) qui recouvre le côté supérieur (50) du corps porteur (48),
**caractérisé en ce que**
le côté inférieur (160) possède une ouverture (164) servant à la mise en contact de l'unité d'interprétation (46) à l'intérieur du corps porteur,
la première surface latérale (52a) possédant une première cavité (176a) et la deuxième surface latérale (52b) une deuxième cavité (176b), et
le côté inférieur (160) possédant un premier et un deuxième chemin de câble (166, 168) et le premier chemin de câble (166) reliant l'ouverture (164) à la première cavité (176a) et le deuxième chemin de câble (168) reliant l'ouverture (164) à la deuxième cavité (176b).

2. Tapis sensible selon la revendication 1, le côté inférieur (160) définissant un plan plat (162) et le premier et le deuxième chemin de câble (166, 168) étant noyés dans le côté inférieur.

3. Tapis sensible selon l'une des revendications 1 ou 2, le premier et le deuxième chemin de câble (166, 168) étant des enfoncements allongés de type canaux dans le côté inférieur (160) du corps porteur (48), avec une longueur définie et une largeur définie.

4. Tapis sensible selon la revendication 3, la longueur définie du premier chemin de câble (166) étant égale à la longueur définie du deuxième chemin de câble (168).

5. Tapis sensible selon l'une des revendications 3 et 4, le premier chemin de câble (166) possédant une première portion (184) et une deuxième portion (186), la largeur définie étant constante dans la première portion (184) et, dans la deuxième portion (186), la largeur définie variant sur la longueur de la portion.

6. Tapis sensible selon l'une des revendications 3 à 5, les enfoncements allongés de type canaux possédant, en largeur dans une section transversale, un profilé en forme de tonnelet.

7. Tapis sensible selon l'une des revendications 1 à 6, le premier et le deuxième chemin de câble (166, 168) étant configurés de telle sorte que le premier chemin de câble (166) relie sans coude l'ouverture (164) et la première cavité (176a) et le deuxième chemin de câble (168) relie sans coude l'ouverture (164) et la deuxième cavité (176b).

8. Tapis sensible selon l'une des revendications 1 à 7, le premier et le deuxième chemin de câble (166, 168) possédant un tracé de type courbe avec une courbure qui varie.

9. Tapis sensible selon l'une des revendications 1 à 8, le premier chemin de câble (166) possédant un tracé de type courbe comprenant au moins une portion droite et comprenant au moins un coude de transition.

10. Tapis sensible selon l'une des revendications 1 à 9, le premier chemin de câble (166) et le deuxième chemin de câble (168) possédant au moins une portion commune dans la zone de l'ouverture (164).

11. Tapis sensible selon l'une des revendications 1 à 10, le contact avec l'unité d'interprétation (46) étant établi par le biais d'un câble, qui est fixé dans l'ouverture (164) et qui sort du corps porteur (48) avec une longueur de câble définie.

12. Tapis sensible selon la revendication 11, le câble possédant un connecteur à enfichage et le côté inférieur (160) possédant un premier creux (174a) et un deuxième creux (174b) en tant que logement pour le connecteur à enfichage.

13. Tapis sensible selon la revendication 12, le premier creux (174a) étant disposé à l'extrémité du premier chemin de câble (166) et débouchant dans la première cavité (176a) et le deuxième creux (174b) étant disposé à l'extrémité du deuxième chemin de câble (168) et débouchant dans la deuxième cavité (176b).

14. Tapis sensible selon l'une des revendications 12 à 13, le premier creux (174a) et le deuxième creux (174b) se croisant sous un angle de préférence en angle droit.

15. Tapis sensible selon l'une des revendications 12 à 14, le connecteur à enfichage possédant un côté de raccordement et le premier creux (174a) étant configuré de telle sorte que le connecteur à enfichage peut être introduit dans une première position et dans une deuxième position dans le premier creux (174a), dans la première position le côté de raccordement du connecteur à enfichage se terminant à fleur de la surface latérale (52a) et dans la deuxième position le côté de raccordement du connecteur à enfichage étant disposé sans être à fleur de la surface latérale (52a).
